# EUROPÄISCHE PATENTSCHRIFT

(11) **EP 4 508 390 B1**
(45) Veröffentlichungstag und Bekanntmachung des Hinweises auf die Patenterteilung: **14.10.2026**
(21) Anmeldenummer: 23717894.2
(22) Anmeldetag: 05.04.2023
(51) Int. Cl.: G01B 11/25, G01D 11/24

(54) **OPTISCHE PRÜFVORRICHTUNG SOWIE BAUKASTEN ZU SEINER ERSTELLUNG**
OPTICAL TESTING DEVICE AND KIT FOR CONSTRUCTION THEREOF
DISPOSITIF DE CONTRÔLE OPTIQUE ET KIT POUR SA CONSTRUCTION

(30) Priorität: 11.04.2022 DE 102022108725
(43) Veröffentlichungstag der Anmeldung: 19.02.2025
(73) Patentinhaber: SmartRay GmbH, 82515 Wolfratshausen (DE)
(72) Erfinder: REITER, Mathias, 82069 Hohenschäftlarn (DE); SIMON, Alexander, 82515 Wolfratshausen (DE)
(74) Vertreter: Weickmann & Weickmann PartmbB
(86) Internationale Anmeldenummer: PCT/EP2023/058962
(87) Internationale Veröffentlichungsnummer: WO 2023/198553

(56) Entgegenhaltungen:
- WO-A2-2015/111031
- DE-A1- 102011 001 214
- DE-A1- 102016 012 567
- US-A1- 2019 113 331
- US-A1- 2021 048 291
- US-A1- 2021 101 577

## Beschreibung

### I. Anwendungsgebiet

Die Erfindung betrifft das optische berührungslose Abtasten von Oberflächen, um die dreidimensionale Kontur der Oberfläche zu ermitteln.

### II. Technischer Hintergrund

In der Industrie muss häufig die Maßhaltigkeit von Oberflächen-Konturen überprüft werden, beispielsweise die Querschnittsform einer Schweißnaht oder einer Dichtraupe. Dabei werden häufig optische, berührungslose Abtast-Verfahren benutzt, um jede Gefahr der Beschädigung der Oberfläche zu vermeiden.

Ein gängiges Verfahren ist das sogenannte Lichtschnitt-Triangulationsverfahren, bei dem mittels Laser und einem davon erzeugten Lichtfächer ein Lichtband auf die abzutastende Oberfläche, beispielsweise quer über die Schweißnaht, aufgestrahlt wird und aus einer Abtastrichtung, die verschieden ist von der Aufstrahlrichtung des Lichtfächers, mittels eines optischen Sensors wie etwa eines CCD-Sensors, das von der Oberfläche in verschiedene Richtungen, und damit auch in Richtung des Sensors, reflektierte Laserlicht aufgenommen wird.

Aus der Form und dem Verlauf des Lichtband-Abbildes des Lichtbandes auf dem flächigen optischen Sensor kann in Kenntnis des Winkelversatzes zwischen aufgestrahltem Fächer und Betrachtungsrichtung des CCD-Sensors, also der Abtastrichtung, die tatsächliche Kontur der Werkstückoberfläche, etwa der Schweißnaht an der Stelle des aufgestrahlten Lichtbandes berechnet werden.

Durch Relativbewegung des Lichtbandes quer zu ihrem Verlauf, etwa entlang der Schweißnaht, über die Oberfläche und wiederholte Konturbestimmung vielfach hintereinander kann auf diese Art und Weise die gesamte interessierende Oberfläche abgetastet und dreidimensional vermessen werden.

Entsprechende optische Prüfvorrichtungen sind bekannt, und umfassen neben der Lichtquelle, meist einem Laser, zum Erzeugen des Lichtfächers sowie dem zweidimensionalen flächigen Sensor samt vorgeschalteter Optik die Auswerteelektronik für die Signale des Sensors sowie die Stromversorgung für alle elektrischen Komponenten einschließlich Spannungsaufbereitung sowie eine oder mehrere Stecker-Buchsen zum Anstecken eines Steckers und Weiterleiten der Ergebnisse an eine übergeordnete Kontrolleinheit. Um die Prüfeinheit kompakt zu gestalten, ist eher Gehäuse meist quaderförmig gestaltet.

Zusätzlich besitzt das Gehäuse der Prüfvorrichtung in aller Regel eine Befestigungsvorrichtung, um sie an einem Bauteil der Umgebung zu befestigen.

Wenn zur Prüfung die Oberfläche im Durchlaufverfahren unter der Prüfvorrichtung durchläuft, wird die Prüfvorrichtung ortsfest montiert, bei stillstehenden Produkt-Oberflächen ist die Prüfvorrichtung häufig an einer beweglichen Handhabungseinheit wie einem Roboter-Arm befestigt und wird von diesem geführt.

Zu den Oberflächenbereichen, die am häufigsten optisch überprüft werden müssen, zählen u.a. Schweißnähte, Lötnähte, Klebenähte oder Dichtungsnähte, wobei gerade solche Oberflächenbereiche häufig nicht nur auf ebenen, gut zugänglichen Oberflächen angeordnet sind, sondern im Innenwinkel zwischen zwei Bauteilen, oft auch in spitzwinkligen Innenwinkeln oder auf andere Art und Weise schwer zugänglichen Stellen.

Aus dem Stand der Technik in US 2021101577 A1 ist beispielsweise ein multifunktionales, tragbares und optoelektronisches Messgerät zur Vermessung von Profilen bekannt.

### III. Darstellung der Erfindung

### a) Technische Aufgabe

Es ist daher die Aufgabe gemäß der Erfindung, eine Prüfvorrichtung und insbesondere einen Baukasten zu deren Aufbau zur Verfügung zu stellen, die auch an schwer zugänglichen Stellen einsetzbar ist und insbesondere leicht je nach räumlichen Gegebenheiten der Prüfaufgabe gestaltet werden kann.

### b) Lösung der Aufgabe

Diese Aufgabe wird durch die Merkmale der Ansprüche 1 und 16 gelöst. Vorteilhafte Ausführungsformen ergeben sich aus den Unteransprüchen.

Da gerade solche Nähte zuvor unter den gleichen Zugänglichkeits-Bedingungen auch erzeugt werden müssen, besitzen die entsprechenden Bearbeitungseinheiten, etwa Schweiß-Vorrichtungen oder Löt-Vorrichtungen oder Dosier-Vorrichtungen zum Ausdosieren von Kleber oder Dichtmasse, häufig eine Pistolenform und werden als Schweißpistole etc. bezeichnet. Damit ist gemeint, dass sich von dem Handgriff (bei einer manuell geführten Schweißpistole) oder einem hinteren Befestigungsflansch (bei einer von einem Roboter-Arm geführten Schweißpistole) ein relativ langer, insbesondere dünner, Distanz-Abschnitt des Gehäuses der Vorrichtung nach vorne erstreckt, an dessen vorderen Ende der eigentliche Arbeitskopf, also ein Schweißkopf oder ein Dosierkopf, befestigt ist. Aufgrund dieses Distanz-Abschnittes kann man auch in tiefen und schmalen Kavitäten befindliche Bearbeitungsstellen erreichen.

Der Grundgedanke der Erfindung besteht darin, die optische Prüfvorrichtung nicht wie bisher in einem meist quaderförmigen, oft annähernd Würfel-förmigen, Gehäuse unterzubringen, sondern in einem Gehäuse, welches etwa die Form der Bearbeitungseinheit besitzt, die die zu überprüfende Naht oder Raupe erzeugt hat, beispielsweise die Form einer üblichen Schweißpistole, Lötpistole oder Dosier-Pistole wie vorstehend beschrieben.

Hinsichtlich der Prüfvorrichtung wird die bestehende Aufgabe dementsprechend dadurch gelöst, dass deren Gehäuse mehrere Gehäuse-Abschnitte aufweist, die zusammen ein quer zur größten Erstreckungsrichtung der Prüfvorrichtung, der Längsrichtung oder axialen Richtung der Prüfvorrichtung, zumindest im vorderen Bereich relativ dünnen ausgebildet ist und damit ein zumindest im vorderen Bereich längliches schlankes Gehäuse aufweist, um Oberflächen-Bereiche, die von einem analog geformten Pistolen-ähnlichen Arbeitsgerät erzeugt wurden, auch optisch überprüfen zu können, indem zumindest der Prüfkopf der Prüfvorrichtung nahe genug an den interessierenden Oberflächenbereich, wie eine Schweißnaht oder eine Dichtungsraupe herangebracht werden kann.

Deshalb umfasst ein solches Gehäuse erfindungsgemäß drei Abschnitte, nämlich
- ein Kopf-Gehäuse am vorderen freien Ende des Gehäuses, in dem sich einerseits die Lichtquelle und andererseits der optische Sensor - die zusammen als Prüfkopf bezeichnet werden - befinden, aber insbesondere nicht die relativ viel Raum beanspruchende Verarbeitungseinheit,
- ein von diesem vorderen Ende am entgegengesetzten hinteren Ende des Gehäuses befindliches Auswertungs-Gehäuse, in dem sich genau diese elektronische Verarbeitungseinheit befindet, die zusammen mit Spannungsaufbereitung und Signal-Weiterleitung aus mehreren Elektronik-Platinen besteht, die mit elektronischen Bauteilen, wie Widerständen und Dioden etc. bestückt und miteinander elektrisch verbunden eine oder mehrere elektronische Schaltungen bilden und
- zwischen diesen beiden Gehäuse-Abschnitten ein längliches, vorzugsweise wie ein Rohr hohles, Distanz-Gehäuse, durch welches oder an dem entlang die elektrischen Leitungen vom Kopfgehäuse zum Auswertungsgehäuse verlaufen können.

Unter einem länglichen Distanz-Gehäuse wird insbesondere ein solches verstanden, welches in Richtung seiner größten Erstreckung, der axialen Distanz-Richtung, mindestens 5 mal, besser 7 mal, besser 10 mal so lang ist wie in seiner größten Quererstreckung lotrecht hierzu gemessen.

Insbesondere besitzt das Distanz-Gehäuse eine größte Quererstreckung von maximal 5 cm, besser maximal 4 cm, besser maximal 3 cm, besser maximal 2 cm.

Insbesondere besitzt das Distanz-Gehäuse eine axialen Distanz-Richtung von mindestens 15 cm, besser mindestens 20 cm, besser mindestens 30 cm, besser mindestens 40 cm.

Ein solches längliches Distanz-Gehäuse dient lediglich dazu, das im Vergleich zum Auswertung-Gehäuse deutlich, in Querrichtung zur Längsrichtung gemessenen mindestens um den Faktor 3, besser den Faktor 4, kleinere Kopf-Gehäuse ausreichend weit entfernt von dem eine größere Dicke, also Quererstreckung aufweisenden, Auswertungsgehäuse zu platzieren, damit das - vor allem hinsichtlich seiner Quererstreckung so klein wie möglich gestaltete - Kopf-Gehäuse auch in relativ enge Spalte und Vertiefungen eingefahren werden kann.

Vorzugsweise sind diese drei Gehäuse-Abschnitte auch als separate, dicht aber lösbar miteinander verbindbare, Gehäuse-Teile ausgebildet, die insbesondere miteinander verschraubt werden können. Dies vereinfacht und verbilligt die Herstellung der einzelnen Gehäuse-Teile, ermöglicht aber auch die Verwirklichung eines Baukastens mit verschieden gestalteten Gehäuse-Teilen, um mittels z.B. unterschiedlich langen Distanz-Gehäusen je nach Anwendungsfall eine längere oder kürzere Prüfvorrichtung herzustellen.

Die axialen Richtungen der einzelnen Gehäuse-Abschnitte oder Gehäuse-Teile müssen nicht zueinander fluchten.

So kann die axiale Kopf-Richtung des Kopf-Gehäuses von seinem hinteren Ende zu seinem vorderen Ende in einem Winkel zur axialen Distanz-Richtung des meist geraden und stabförmigen Distanz-Gehäuses verlaufen, und auch die axiale Auswertungs-Richtung des Auswertungs-Gehäuses muss sich nicht nach hinten fluchtend an die axiale Distanz-Richtung des Distanz-Gehäuses anschließen. Unter der jeweiligen axialen Richtung wird diejenige Richtung verstanden, in der der jeweilige Gehäuse-Abschnitt seine größte Erstreckung aufweist.

Darüber hinaus kann das Distanz-Gehäuse statt gerade auch bogenförmig oder abgewinkelt sein je nach Arbeitsauftrag und Zugänglichkeit der zu überprüfenden Oberflächenbereiche.

Die Länge des Distanz-Gehäuses in der axialen Distanz-Richtung sollte vorzugsweise mindestens das Doppelte, besser mindestens das Dreifache, besser mindestens das Fünffache der Länge des Kopf-Gehäuses in dessen axialer Kopf-Richtung betragen.

Um das Einbringen des Kopf-Gehäuses in enge Vertiefungen nicht zu behindern, sollte die größte Dicke des Distanz-Gehäuses, also lotrecht zu seiner axialen Richtung gemessen, vorzugsweise geringer sein als die größte Dicke des Kopf-Gehäuses, insbesondere geringer als das 0,7-fache der größten Dicke des Kopf-Gehäuses. Unter der Dicke wird die größte Quer-Erstreckung eines GehäuseAbschnittes gemessen lotrecht zu seiner axialen Richtung verstanden.

Die erfindungsgemäße Prüfvorrichtung kann weitere Bauteile umfassen:
Beispielsweise ein seitlich über das Auswertungs-Gehäuse vorstehender Flanschring oder eine Flanschplatte, die dem Befestigen, insbesondere Verschrauben, an einer Handhabungseinheit wie etwa dem vorderen Ende eines Roboter-Armes dient. Vorzugsweise befindet sich ein solcher Flanschring oder eine Flanschplatte am hinteren Ende der Prüfvorrichtung und insbesondere am hinteren Ende von dessen Auswertungs-Gehäuse und kann als Flanschplatte gleichzeitig die rückwärtige Stirnwand des Auswertungs-Gehäuses bilden.

Die Prüfvorrichtung kann ferner eine Stecker-Buchse in einer Wandung des Auswertungs-Gehäuses aufweisen zum Einstecken eines Steckers für die drahtgebundene elektrische Verbindung, insbesondere signaltechnischen Verbindung, mit einer übergeordneten Prüfeinheit, etwa einer Steuerzentrale zum Steuern der Prüfvorrichtung.

Eine solche Prüfvorrichtung kann ferner eine Adapter-Platte, insbesondere eine ringförmige Adapter-Platte, umfassen, um den Flanschring oder die Flanschplatte an unterschiedlich gestalteten Aufnahmen, etwa unterschiedlich gestalteten Roboter-Armen, befestigen zu können, da meist jeder Roboter-Arm z.B. ein anderes Lochbild zum Anschrauben eines Werkzeuges aufweist und der Flanschring oder die Flanschplatte nicht alle am Markt verfügbaren Lochbilder enthalten kann.

Mittels einer Adapter-Platte, die einerseits mit dem Lochbild der Flanschplatte und andererseits mit dem Lochbild des z.B. Roboter-Armes übereinstimmende Durchgangsöffnungen oder Gewindeöffnungen aufweist, ist dies möglich.

Die Prüfvorrichtung kann ferner eine Zugentlastung zum Fixieren des in diese Stecker-Buchse mit einem endseitigen Stecker eingesteckten Kabels aufweisen, welches einen Zug auf das Kabel, insbesondere in Richtung Herausziehen des Steckers aus der Stecker-Buchse, aber auch in Querrichtung zur Verlaufsrichtung des Kabels, verhindert.

Eine solche Zugentlastung umfasst in aller Regel einen in Längsrichtung verlaufenden Haltestab, der mit seinem vorderen Ende am Auswertungsgehäuse, insbesondere dessen Flanschplatte, befestigt werden kann und am hinteren Ende die Befestigungsvorrichtung, beispielsweise Klemmvorrichtung, aufweist, in der das zur Stecker-Buchse führende Kabel zur Zugentlastung fixiert wird.

Bei den Roboter-Armen, an denen solche Prüfvorrichtungen befestigt werden, ist grundsätzlich zwischen Hohlarm-Robotern, die hohle, in ihrer Längsrichtung durchgängige Armteile umfassen, und nicht Nicht-Hohlarm-Robotern zu unterscheiden:
Während bei Hohlarm-Robotern die Kabelführung in der Regel im Inneren der hohlen Armteile des Roboters erfolgt, müssen bei nicht-hohlen Roboter-Armen die Kabel entlang der Außenseite des Roboter-Armes geführt und dort fixiert werden.

Dementsprechend ist die Stecker-Buchse in aller Regel nur dann zentral an der rückwärtigen Stirnwand des Auswertungs-Gehäuses, insbesondere dessen Flansch-Platte, befestigt, wenn die Prüfvorrichtung an einem solchen Hohlarm befestigt werden soll. Dann verläuft die Zugentlastung meist ebenso wie das darin gehaltene Kabel im Inneren des angrenzenden hohlen Armteiles des Roboters weiter.

Bei einem nicht-hohlen Roboter-Arm befindet sich die Stecker-Buchse - oder dann häufig zwei oder mehr Stecker-Buchsen getrennt - in einer Umfangswand des Auswertungs-Gehäuses, wo dann ein oder mehrere Kabel eingesteckt werden und die sich daran anschließenden Kabel an der Flansch-Platte vorbei außen am Roboter-Arm entlanggeführt werden.

Damit die in den Signal-Leitungen vom Kopf-Gehäuse bis zum Auswertungs-Gehäuse zu führenden elektrischen Signale auf diesem relativ langen Weg nicht durch elektromagnetische Strahlung negativ beeinflusst werden, sind die Signal-Leitungen nicht nur insgesamt als elektromagnetisch abgeschirmtes Koaxial-Kabel - also mit einer umfänglich umlaufenden Abschirmung um die Signalleitung - ausgebildet, sondern jede einzelne Ader der mehradrigen Signal-Leitung, sodass auch deren gegenseitige elektromagnetische Beeinflussung vermieden wird.

Gerade diese Maßnahme ermöglicht sehr weit auskragende Prüfvorrichtungen mit langem Distanz-Gehäuse.

Abhängig von der räumlichen Situation der zu überprüfenden Oberflächenbereiche kann es sinnvoll sein, dass das mit seiner axialen Kopf-Richtung im Winkel zur axialen Distanz-Richtung des Distanz-Gehäuses stehende Kopf-Gehäuse in unterschiedliche Drehlagen am Distanz-Gehäuse befestigt, insbesondere verschraubt, werden kann, vor allem dann, wenn das Distanz-Gehäuse kein geradlinig verlaufendes, sondern ein gebogenes oder gewinkeltes Distanz-Gehäuse ist.

Vorzugsweise sind deshalb die Befestigungselemente, insbesondere die Verschraubungs-Elemente wie Verschraubungs-Bohrungen, am Distanz-Gehäuse einerseits und dem Kopf-Gehäuse andererseits so ausgebildet, dass diese in mehreren verschiedenen Drehlagen, insbesondere um die axiale Distanz-Richtung herum, zueinander gegenseitig fixiert werden können.

Eine analoge Ausbildung kann auch sinnvoll sein zwischen Distanz-Gehäuse und Auswertungs-Gehäuse, insbesondere, wenn das Auswertungs-Gehäuse nicht symmetrisch um seine axiale Richtung ausgebildet ist und/oder das Distanz-Gehäuse nicht zentrisch am Auswertungs-Gehäuse befestigt ist.

Um mit dem Kopf-Gehäuse auch in der Tiefe von schmaler werdenden Kavitäten ausreichend nah an z.B. eine Schweißnaht herankommen zu können, ist in der Seitenansicht auf die, insbesondere im Bereich des Kopf-Gehäuses gewinkelte, erfindungsgemäße Prüfvorrichtung das Kopf-Gehäuse von seiner dicksten Stelle aus nach vorne zum freien Ende hin schmaler werdend ausgestaltet.

Erfindungsgemäß besitzt das Kopf-Gehäuse in der Seitenansicht betrachtet einen oberen und einen unteren Kopf-Endbereich an seinem freien Ende, die durch einen vom freien Ende her in das Kopf-Gehäuse hineinreichenden Einschnitt dort voneinander getrennt sind. Erfindungsgemäß steht dabei einer der beiden Kopf-Endbereiche weiter in axialer Kopf-Richtung nach vorne vor als der andere, vorzugsweise bei einem nach unten abgewinkelten Kopf-Gehäuse steht der obere Kopf-Endbereich weiter vor.

Dies ermöglicht es, die Lichtquelle, insbesondere den Laser, in dem weiter vorstehenden Kopf-Endbereich anzuordnen und den zweidimensionalen Sensor mit seiner Sensor-Fläche, insbesondere einschließlich der vorgelagerten Optik aus einer oder mehreren optischen Linsen, im zurückgesetzten Kopf-Endbereich anzuordnen. Dadurch kann mit einer sehr geringen Dicke des Kopf-Gehäuses ausgekommen werden.

Vorzugsweise wird dabei das Licht, insbesondere der Lichtfächer, aus dem KopfGehäuse heraus in einer Abstrahl-Richtung ausgegeben, die in einem spitzen Winkel zur axialen Kopf-Richtung - die insbesondere übereinstimmend mit der lotrecht auf der Sensor-Fläche stehenden "Blickrichtung" des Sensors ist -, der ebenfalls im schmaler werdenden Endbereich des Kopf-Gehäuse angeordnet ist.

Die dem flächigen Sensor vorgelagerte Optik, welche aus einer oder mehreren optischen Linsen bestehen kann, wird vorzugsweise als Einheit vorgefertigt und von der freien Stirnseite her in den Endbereich des Kopf-Gehäuses von vorne eingesteckt oder eingeschraubt. Die Optik kann in dieser montierten Position zusätzlich mittels einer am Kopf-Gehäuse fixierbaren Schutzkappe geschützt und/oder gehalten sein, die natürlich in ihrer Frontseite eine Durchgangsöffnung für das ankommende Licht aufweisen muss.

Die Abstrahlrichtung des Lichts aus der Lichtquelle, die ebenfalls im schmaler werdenden Endbereich des Kopf-Gehäuses angeordnet ist, verläuft dabei in einem stumpfen Winkel zur Abstrahlrichtung des Lichts aus dem Kopf-Gehäuse nach außen, was mittels Umlenkung durch einen im Kopf-Gehäuses angeordneten Spiegel erfolgt.

Durch beide Maßnahmen in Summe kann das Kopf-Gehäuse in der Seitenansicht, also in Blickrichtung auf dem Zwischenwinkel zwischen axialer Distanz-Richtung und axialer Kopf-Richtung, betrachtet schmaler gewählt werden als bei einer Anordnung der Lichtquelle so, dass deren Lichtfächer ohne Umlenkung mittels eines Spiegels aus dem Kopf-Gehäuse ausgegeben wird.

Ferner ist vorzugsweise direkt in der Wandung des Kopf-Gehäuses eine von außen sichtbare Funktionsanzeige der Prüfvorrichtung vorhanden, die von einer innerhalb des Kopf-Gehäuses liegenden LED beleuchtet wird, sodass unmittelbar am Kopf-Gehäuse jederzeit erkennbar ist, ob die Prüfvorrichtung in Betreib ist oder nicht. Vorzugsweise ist in der Wandung des Kopf-Gehäuses zu diesem Zweck ein lichtdurchlässiger Wandabschnitt enthalten, beispielsweis ein Lichtleiter aus Glas oder Kunststoff, der dicht in die Wandung eingebracht ist,

Auch die elektronische Verarbeitungseinheit im Inneren des Auswertungs-Gehäuses ist modulartig aufgebaut, indem die dort unterzubringenden elektronischen Schaltungen, die ja unterschiedlichen Zwecken dienen, auf mehrere Platinen verteilt sind, die lösbar miteinander verbunden sind.

Zum einen ist dies die Auswertungs-Platine auf der zumindest die Auswerte-Schaltung für die Signale des Sensors angeordnet ist, vorzugsweise auch zusätzliche elektrische oder elektronische Bauteile zur Spannungs-Aufbereitung an die Bedürfnisse des Sensors und der Lichtquelle.

Da diese Auswertungs-Platine in der Regel ein Zukauf-Teil ist, welches beispielsweise zusammen mit dem zweidimensionalen Sensor und auf diesen abgestimmt geliefert wird, weist diese Auswertungs-Platine jedoch nicht die Anschlüsse und in der Form auf, wie für z.B. die Stecker-Buchse und/oder den Laser benötigt.

Deshalb ist eine Interface-Platine vorhanden, die dies bietet und mit der Auswertungs-Platine elektrisch verbunden ist, vorzugsweise über beiderseitige elektrische Steckkontakte auf dieser aufgesteckt ist. Der gesamte Datenverkehr und Stromverkehr von und zur Auswertungs-Platine erfolgt somit über die Interface-Platine.

Beide zusammen können an der Innenseite einer Außenwand, vorzugsweise der Umfangswand, des Auswertungs-Gehäuses fixiert, meist verschraubt, werden.

Um die elektrischen Ein- und Ausgänge entsprechend der Anforderungen der Auswertungs-Platine und/oder der Interface-Platine zur Verfügung zu haben, ist die Stecker-Buchse nicht direkt mit der Interface-Platine verbunden, sondern über eine I/O-Platine, welche zu den anderen Platinen hin die benötigten elektrischen Verbindungen aufweist, zur Stecker-Buchse hin jedoch die Buchsen-spezifischen Anschlüsse aufweist.

Dementsprechend wird die I/O-Platine nahe an der Stecker-Buchse angeordnet, insbesondere auf der Innenseite der Wand, in der die Stecker-Buchse eingesetzt ist, also diese durchdringt.

So kann passend zu der oder den verbauten Stecker-Buchsen immer eine entsprechende I/O-Platine verwendet werden, ohne die Interface-Platine an die jeweilige verwendete Stecker-Buchse anpassen zu müssen.

Auf diese Art und Weise können Anpassungen der elektronischen Auswerte-Schaltung an die Umgebung, sei es die verwendeten Stecker-Buchsen, den verwendeten Laser u.ä. sehr einfach durchgeführt werden, da hierfür nur Teile der Schaltung in Form der entsprechenden Platine modifiziert und ausgetauscht werden müssen.

Durch den zuvor beschriebenen Aufbau kann ein Baukasten vorgehalten werden, der durch relativ wenige verschiedene Einzelteile den Aufbau einer großen Anzahl unterschiedlich gestalteter Varianten der Prüfvorrichtung ermöglicht.

So umfasst der Baukasten zum einen hinsichtlich des Gehäuses wenigstens eine Sorte eines Auswertungs-Gehäuses und wenigstens eine Sorte eines Kopf-Gehäuses, aber mehrere Sorten von Distanz-Gehäusen, wobei sich diese Sorten von Distanz-Gehäusen beispielsweise durch ihre Länge in ihrer axialen Richtung unterscheiden. Damit können auf einfache Art und Weise unterschiedlich weit auskragende Gehäuse für derartige Prüfvorrichtungen erstellt werden, indem die ausgewählten drei Gehäuseteile lösbar miteinander verbunden werden, etwa miteinander verschraubt werden.

Dabei können die verschiedenen Sorten von Distanz-Gehäusen, vorzugsweise sowohl eine gerade als auch eine gewinkelte oder gebogene Sorte umfassen, je nach räumlichen Gegebenheiten der bestehenden Arbeitsaufgabe.

Als weitere Baukasten-Teile können eine oder vorzugsweise mehrere verschiedene Flansch-Platten zum Befestigen an dem hinteren Ende des Gehäuses, insbesondere dem Auswertungs-Gehäuse oder gar als Teil des Auswertungs-Gehäuses, vorhanden sein, sodass eine passende Flansch-Platte abhängig von dem Bauteil, an dem die Prüfvorrichtung befestigt werden soll, ausgewählt werden kann.

Steht eine solche passende Flansch-Platte nicht zur Verfügung, so kann eine entsprechende Adapter-Platte zwischen Flansch-Platte und das die Prüfvorrichtung tragende Bauteil montiert werden, die Befestigungsvorrichtungen aufweist, die auf der einen Seite zur Flansch-Platte und auf der anderen Seite zum tragenden Bauteil passen, beispielsweise ein entsprechendes Lochbild zum Verschrauben.

Abhängig von den unterschiedlichen Längen der Distanz-Gehäuse sollte der Baukasten auch zumindest hinsichtlich ihrer Länge unterschiedliche Sorten von elektrischen Signal-Leitungen und/oder Strom-Leitungen umfassen, die vorzugsweise in dem Distanz-Gehäuse verlaufen sollen und den Prüfkopf einerseits und die Auswertungseinheit andererseits elektrisch verbinden.

Vorzugsweise sind dabei die Signal-Leitungen als abgeschirmte Koaxial-Kabel ausgeführt, und zwar insbesondere für jede einzelne Ader der Signal-Leitungen, wobei unter einer Ader nicht der einzelne Draht einer Litze verstanden wird, sondern die gesamte Ader, die auch das gleiche Signal leitet.

Ferner ist vorzugsweise nicht nur eine, sondern mehrere Sorten von Stecker-Buchsen vorhanden, die in der Wandung des Auswertungs-Gehäuses montiert werden können zur Signal-Weiterleitung.

Dementsprechend ist vorzugsweise nicht nur eine Sorte von Auswertungs-Gehäusen vorhanden, sondern mehrere Sorten, abhängig beispielsweise davon, in welcher Wand des Auswertungs-Gehäuses sich der Durchlass für die entsprechende Stecker-Buchse befindet.

Bevorzugt umfasst der Baukasten auch eine Zugentlastung als Baukasten-Teil, die am Auswertungs-Gehäuse oder der Flansch-Platte oder der Adapter-Platte befestigt werden kann.

Auch hinsichtlich des Aufbaus der konkreten elektronischen Auswertungseinheit im Inneren des Auswertungs-Gehäuses kann der Baukasten unterschiedliche Baukasten-Teile umfassen, insbesondere zusätzlich zu den verschiedenen Sorten von Gehäuse-Teilen:
Zum einen als Baukasten-Teil eine Auswertungs-Platine, die zumindest die Auswerte-Schaltung für die vom Sensor gelieferten Signale trägt.

Des Weiteren als Baukasten-Teil eine Interface-Platine, die mit den elektrischen Ein-/Ausgängen der Auswertungs-Platine koppelbar ist, insbesondere direkt über Steckverbinder, sodass der gesamte Ein- und Ausgang bzgl. Signalen und Stromversorgung der Auswertungs-Platine über die Interface-Platine geschieht.

Des Weiteren kann der Baukasten als Baukasten-Teil eine I/O-Platine aufweisen, die einerseits Ein- und Ausgänge passend zu denen der Stecker-Buchse aufweist, andererseits passend zu den Ein- und Ausgängen der Interface-Platine, also passend nicht nur hinsichtlich der körperlichen Form der Verbindungselemente, sondern auch der elektrischen Parameter, wie Spannung, Stromstärke, etc.

Bei den angesprochenen Platinen handelt es sich selbstverständlich jeweils nicht um leere Elektronik-Platinen, sondern um mit den entsprechenden Halbleitern, also elektronischen Bauteilen, bereits fertig bestückten und zu einer elektronischen Schaltung verdrahtete Elektronik-Platinen.

### c) Ausführungsbeispiele

Ausführungsformen gemäß der Erfindung sind im Folgenden beispielhaft näher beschrieben. Es zeigen:
- **Figur 1:**: einen Prüfvorrichtung gemäß dem Stand der Technik zur Anwendung des Lichtschnitt-Triangulationsverfahrens in der Seitenansicht,
- **Figur 2a:**: die Prüfvorrichtung der Figur 1 in der Frontansicht,
- **Figur 2b:**: eine Aufsicht auf die Oberfläche des Objektes,
- **Figur 3:**: ein Lichtband-Abbild auf dem flächigen Sensor,
- **Figur 4a, b:**: eine erfindungsgemäße Prüfvorrichtung in der Seitenansicht und in der Aufsicht,
- **Figur 4c:**: eine Stirnansicht der Prüfvorrichtung gemäß Figur 4a, b entsprechend der Linie C - C in **Figur 4a****,**
- **Figur 4d:**: eine Stirnansicht der Prüfvorrichtung gemäß Figur 4a, b entsprechend der Linie D - D in **Figur 4a****,**
- **Figur 5a, b:**: Längsschnitte durch die Prüfvorrichtung gemäß Figur 4a, b mit gleicher Blickrichtung wie in **Figur 4a****,**
- **Figur 6a, b:**: Detailvergrößerung der **Figuren 5a****, b.**

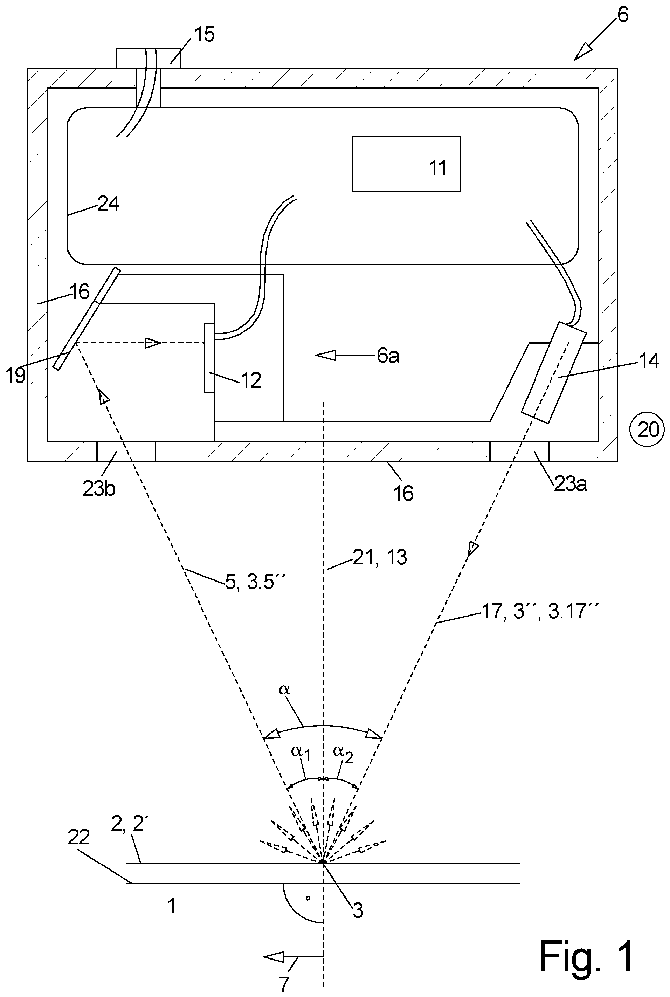

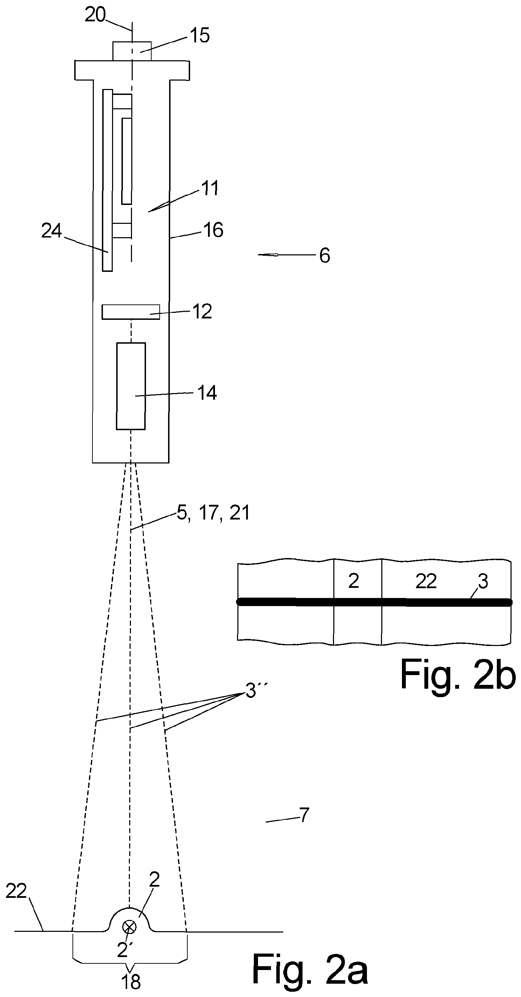

**Figur** 1 zeigt eine bekannte, Quader-förmige Prüfvorrichtung 6 in der Seitenansicht, die auch erkennen lässt, wie das bekannte Lichtschnitt-Triangulationsverfahren prinzipiell funktioniert, welches im Rahmen der Erfindung eingesetzt werden soll bevorzugt vor anderen optischen, berührungslosen Prüfverfahren, die auf der Reflektion von Licht an der zu überprüfenden Oberfläche basieren:
Dabei wird ein Lichtfächer **3",** in der Regel bewirkt durch einen Laser als Lichtquelle **14,** auf die Oberfläche **22** eines Objektes 1 gerichtet und erzeugt dort ein Lichtband 3, welches aufgrund der Fächerform - wie in **Figur 2b** ersichtlich - streifenförmig ausgebildet ist mit einer Lichtbandlänge **18,** wie aus **Figur 2a** ersichtlich.

Der von der Oberfläche **22** des Objektes **1** reflektierte Lichtfächer **3.5"** erzeugt in der Prüfvorrichtung **6** auf dem flächigen, optischen Sensor **12** der Detektoreinheit **6a** ein Lichtband-Abbild **4** und in einer damit verbundenen elektronischen Verarbeitungseinheit **11** zum Verarbeiten der von dem Sensor **12** aufgenommenen Bilddaten werden die Ergebnisdaten berechnet, die die Oberflächenkontur der Oberfläche **22** entlang des Lichtbandes **3** wiedergeben.

Obwohl der Lichtfächer **3"** eine - wenn auch sehr geringe - Dicke besitzt und ebenso das Lichtband **3** eine Breite besitzt, wird aufgrund dieser sehr geringen Ausdehnungen für die Zwecke der vorliegenden Anmeldung der Lichtfächer **3"** gleichgesetzt mit der geometrischen Lichtfächer-Ebene **3",** in der er liegt, beispielsweise indem die Lichtfächer-Ebene **3"** in der Mitte der Dicke des Lichtfächers **3"** liegen soll.

Das aufgestrahlte Lichtband **3** wird ebenfalls primär charakterisiert durch seine Verlaufsrichtung **3**'.

Damit sich auf dem optischen Sensor **12** ein Lichtband-Abbild **4** abzeichnet, welches Rückschlüsse auf die tatsächliche Kontur der Oberfläche **2** zulässt, dürfen die - in Richtung der Verlaufsrichtung **3'** des Lichtbandes **3** betrachtete - Aufstrahlrichtung **17** des Lichtfächers **3**" und die Abtastrichtung **5** der Detektoreinheit **6a** nicht zusammenfallen, sondern müssen sich durch einen Triangulationswinkel **α** unterscheiden.

Vorliegend ist die Prüfvorrichtung **6** so angeordnet, dass die Winkelhalbierende **13** zwischen der Aufstrahlrichtung **17** des Lichtfächers **3**" und der Abtastrichtung 5 der Detektoreinheit eine lotrechte **21** zur Oberfläche **22** bildet, also diese beiden Richtungen also zu der Winkelhalbierenden **13** jeweils einen Zwischenwinkel **α₁** = **α₂** einnehmen, die in Summe den Triangulationswinkel **α** bilden.

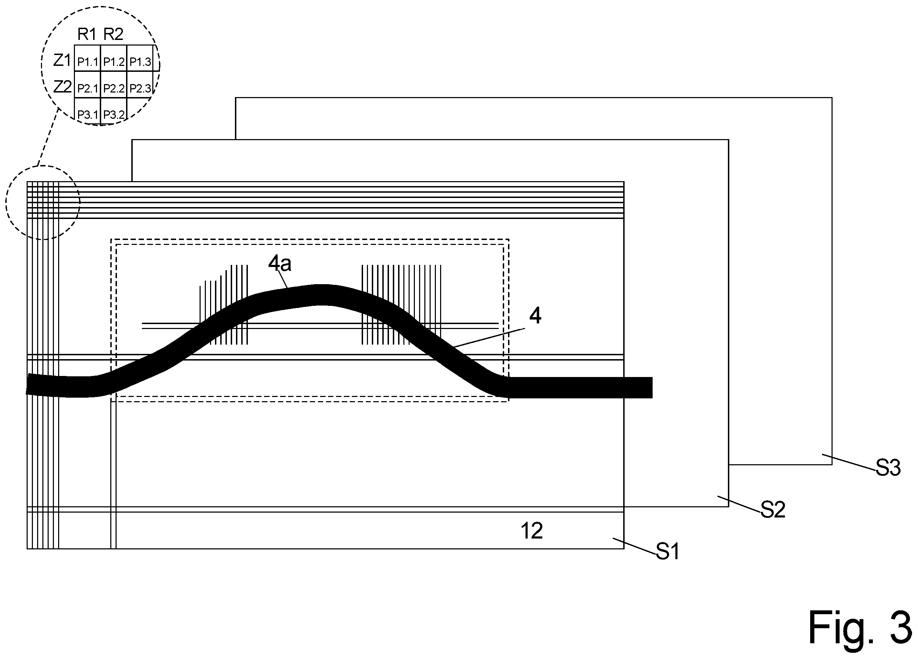

Eine Unebenheit, beispielsweise eine Erhebung **2**a, wie in **Figur 2a** dargestellt, im Auftreffbereich des darauf aufgestrahlten Lichtfächers **3"**, wird als Lichtband 3 auf der Oberfläche **22** und damit als Lichtband-Abbild **4** auf dem Sensor **12** keine gerades Lichtband **4,** sondern ein Lichtband **4** mit einer Aufwölbung **4a** darin ergeben, wie in **Figur 3b** dargestellt, wobei diese Aufwölbung **4a** des Lichtband-Abbildes **4** abhängig von dem Triangulationswinkel α und der Lage der Winkelhalbierenden **13** zur Oberfläche **22** des Objektes 1 sich von der tatsächlichen Form der Aufwölbung **2a,** geschnitten entlang der Lotrechten **21,** unterscheidet.

Gemäß **Figur 1** wird bei einer Struktur der Oberfläche **22,** die auftreffendes Licht diffus streut, das im Bereich des Lichtbandes **3** mit seiner Verlaufsrichtung **3'** auftreffende Licht diffus in alle Richtungen gestreut, und ein Teil davon wird in Richtung der Detektoreinheit **6a,** also des Durchlasses **23b** im Gehäuse **16** der Prüfvorrichtung **6,** reflektiert werden.

Je stärker die Oberfläche **22** spiegelt, umso weniger wird das auftretende Licht diffus gestreut, sondern nur in einer bestimmten Richtung reflektiert. Nur wenn diese Reflexionsrichtung der Abtastrichtung **5** der Detektoreinheit **6a** entspricht, ist auf dem Sensor **12** ein Lichtband-Abbild **4** zu erzielen.

Wegen der bekannten Lage der Prüfvorrichtung **6** sowie seines Triangulationswinkels **α** sowie der Fokussierung der Prüfvorrichtung **6** auf die Oberfläche kann aus den Abmessungen des Lichtband-Abbildes **4** auf die tatsächlichen Abmessungen der Aufwölbung **2**a auf der Oberfläche **22** rechnerisch geschlossen werden.

Wie **Figur 1** zeigt, ist die Prüfvorrichtung **6** von den Abmessungen in seiner Hauptebene **20** sehr kompakt aufgebaut, wobei die Lichtquelle **14,** in der Regel eine Laserpatrone, nahe des für den Lichtstrahl vorgesehenen Durchlasses **23a** im Gehäuse **16** angeordnet ist und der optische Sensor **12** nahe des anderen Durchlasses **23**b, die sich beide in einer der Schmalseiten des Gehäuses **16** befinden, wobei zwischen diesem Durchlass **23b** und dem optischen Sensor **12** häufig eine Umlenkung des in der Abtastrichtung **5** eintreffenden Lichtfächers **3.5"** über einen Spiegel **19** in eine Richtung etwa parallel zu der Außenkante, in der sich die Durchlässe **23**a, b befinden, erfolgt.

Sowohl der Sensor **12** als auch der Spiegel **19,** die gemeinsam die Detektoreinheit 6a bilden, sind dabei an einem Detektor-Basiskörper befestigt, der seinerseits im Gehäuse **16** fixiert ist.

Dadurch verbleibt auf der von der Außenseite mit den Durchlässen **23**a, b abgewandten Hälfte des Gehäuses **16** ausreichend viel Platz, um dort eine parallel zur der Hauptebene **20** des Gehäuses **16** liegende Platine **24** anzuordnen, die die gesamte elektronische Verarbeitungseinheit **11** enthält und mit dem Sensor **12** über elektrische Leitungen ebenso in Verbindung steht wie mit der Lichtquelle **14.** Die von der Verarbeitungseinheit **11** ermittelten Ergebnisdaten werden über einen Stecker oder Kabelausgang **15** ausgegeben.

Die nach dem Lichtschnitt-Triangulationsverfahren hergestellten Einzelaufnahmen, die Scans **S1, S2, S3** usw. werden in zeitlich schneller Abfolge wiederholt, um die sich in Bewegungsrichtung **7** relativ zur Prüfvorrichtung **6** bewegende Oberfläche **22** des Objektes **1** durchgängig zu beobachten.

Die **Figur 3** zeigt ein typisches bandförmiges Lichtband-Abbild **4** des Lichtbandes **3** einschließlich einer Aufwölbung **4a,** wie es sich aufgrund einer Erhebung **2** auf der Oberfläche **22** auf einem optischen Sensor **12** darstellt, wenn die Erstreckungsrichtung **3'** des Lichtbandes **3** quer zur Verlaufsrichtung **2'** der Erhebung **2** liegt:
Da die Fläche des optischen Sensors **12** durch Zeilen **Z1, Z2** usw. sowie durch Reihen **R1, R2** rasterartig in einzelne Pixel, zum Beispiel **P30.17,** unterteilt ist, ergibt die Auswertung des optischen Sensors **12,** welche dieser Pixel von dem Lichtband-Abbild **4** getroffen sind und einen höheren Helligkeitswert besitzen als die nicht getroffenen Pixel.

Mit Hilfe der hintereinander durchgeführten Aufnahmen, der Scans **S1, S2** usw. kann die gesamte dreidimensionale Kontur der zu prüfenden Bereiche der Oberfläche **22** ermittelt werden.

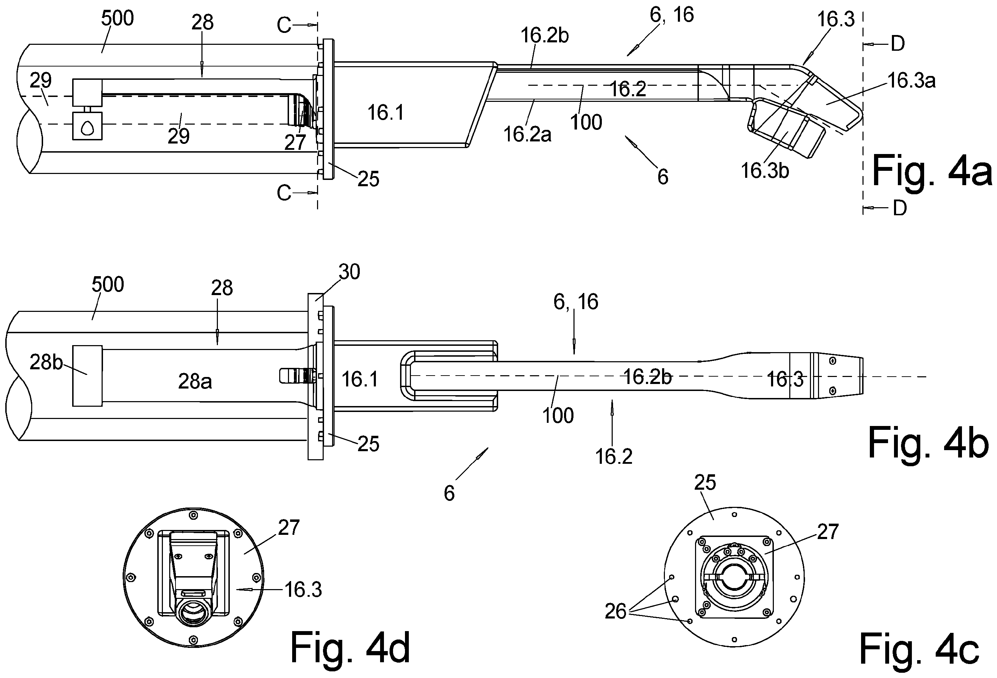

Die **Figuren 4a - 6b** zeigen eine erfindungsgemäße Bauform der Prüfvorrichtung.

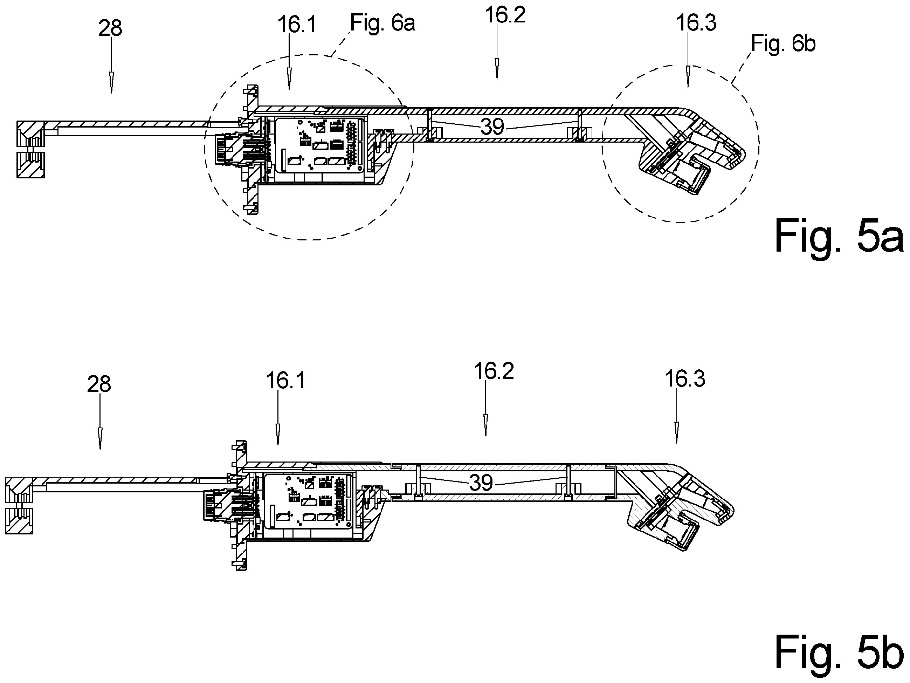

Dabei erstreckt sich das Gehäuse **16** der Prüfvorrichtung ausgehend von einer Flanschplatte **25** nach vorne, im Fall der **Figuren 4a, b** und **5a, b** nach rechts in seiner allgemeinen Längsrichtung **100** und weist drei unterschiedlich gestaltete Gehäuse-Abschnitte auf:
Angrenzend an die Flanschplatte **25** einen ersten Gehäuse-Abschnitt, das sogenannte Auswertungsgehäuse **16.1** - wobei die Flanschplatte **25** einstückig zusammen mit der Umfangswand des Auswertung-Gehäuses **16.1** ausgebildet sein kann -, welches in der Seitenansicht betrachtet, dicker ist als der sich daran anschließende, in die gleiche Längsrichtung 100, mit seiner axialen Distanz-Richtung **16.2'** erstreckende Distanz-Gehäuse **16.2** und an dessen vorderen Ende das Kopf-Gehäuse **16.3,** welches wiederum dicker ist als das Distanz-Gehäuse **16.2** und demgegenüber in seiner axialen Kopf-Richtung **16.3'** auch in der Seitenansicht abgewinkelt zu diesem verläuft. Wie später erläutert, befindet sich im Auswertungs-Gehäuse 16.1 im Wesentlichen die Auswerte-Schaltung für die Signale des Sensors, während sich im Kopf-Gehäuse **16.2** die Lichtquelle, also der Laser **14,** sowie der optische Sensor **12** befinden.

Von der Elektronik im Auswertungs-Gehäuse **16.1** zum Laser **14** und Sensor **12** im Kopf-Gehäuse **16.3** verlaufen zumindest eine Signalleitung **31** und zumindest ein Stromleitung **32** im Inneren des hohlen, rohrförmigen Distanz-Gehäuses **16.2.**

Der Grundgedanke besteht darin, vor allem das Kopf-Gehäuse **16.3** so klein wie möglich, insbesondere in der Dicke quer zu seiner axialen Kopf-Richtung **16.3'** gemessen zu gestalten, um auch an schlecht zugänglichen Oberflächen, etwa in engen Spalten und anderen Vertiefungen, die Oberfläche optisch abtasten zu können.

Die Flanschplatte **25** dient der Befestigung an einem die Prüfvorrichtung **6** tragenden Bauteil, beispielsweise hier dem vorderen Ende eines Roboter-Armes **500,** der in diesem Fall hohl ausgebildet ist, sodass ein Kabel **29** durch das Innere des Roboter-Armes **500** die Steckerbuchse **27** erreichen kann, die in der Flanschplatte **25** etwa zentrisch eingesetzt ist, um die Prüfvorrichtung **6** mit einer übergeordneten, nicht dargestellten Steuerung zu verbinden.

Deshalb ragt in diesem Fall von der Flanschplatte aus nach hinten, also in den Roboter-Arm **500** hinein, eine Zugentlastung **28** ab, die aus einem Tragstab **28a** besteht, die sich ebenfalls etwa in der Haupt-Erstreckungsrichtung 100 der Prüfvorrichtung **6** ein Stück weit in den Roboter-Arm hinein erstreckt und an ihrem freien Ende eine Befestigungsvorrichtung, meist eine Klemmvorrichtung **28b,** aufweist, in der das zur Steckerbuchse **27** führende Kabel **29** geklemmt wird um die gewünschte Zugentlastung zu erzielen.

Die Steckerbuchse **27** kann eine unterschiedliche Anzahl von Pins umfassen und ist in **Figur 4c** dargestellt.

In der Aufsicht der **Figur 4b** ist ferner zwischen dem Roboter-Arm **500** und der Flanschplatte **25** eine Adapterplatte **30** vorhanden, die zur Anpassung der Befestigungselemente auf der einen Seite zu den Befestigungselementen des Roboter-Armes **500** und auf der anderen Seite zu den Befestigungselementen der Flanschplatte **25** passt, wobei die Befestigungselemente beispielsweise Durchgangs-Bohrungen oder Gewinde-Bohrungen sein können.

Im Fall der Bauform der **Figur 4a - 4d** - die in der **Figur 5a** im Längsschnitt dargestellt ist - besteht das Distanz-Gehäuse **16.2** aus hinsichtlich des Umfanges zwei Teilen, nämlich einer im Querschnitt etwa U-förmigen oder C-förmigen unteren Wanne, die an einem Ende mit dem Auswertungs-Gehäuse **16.1** und am anderen Ende mit dem Kopf-Gehäuse **16.3** verschraubt ist. Diese Wanne ist auf der Oberseite offen und kann durch einen oberen Deckel verschlossen werden, wobei der Deckel vorzugsweise mit einem Ende unter ein entsprechendes Wandteil des Auswertungs-Gehäuses **16.1** eingeschoben werden kann und durch von der Unterseite, dem wannenförmigen Basisteil her, eingeschraubte Halteschrauben herangezogen wird und die Öffnung dicht verschließt. Die im Distanz-Gehäuse **16.2** verlaufenden Leitungen **31, 32** - die in **Figur 5a** nicht dargestellt sind - können an diesen Halteschrauben **38** vorbeigeführt werden.

Oben und unten bedeutet für die vorliegende Anmeldung, dass unten diejenige Seite ist, in welche Richtung hin das Kopf-Gehäuse **16.3** abgewinkelt ist.

In der Bauform der **Figur 5a** verläuft die Kontaktfläche am vorderen freien Ende des Distanz-Gehäuses **16.2,** welches bereits am vorderen Ende geknickt ist, somit schräg zu der axialen Richtung **100,** der Haupt-Erstreckungsrichtung der Prüfvorrichtung **6,** also derjenigen Richtung, in der das Gehäuse **16** seine größte Erstreckung aufweist und die hier gleichzeitig die Erstreckungsrichtung des Distanz-Gehäuses **16.2** in dessen mittleren Bereich ist.

Das Distanz-Gehäuse **16.2** setzt wie ersichtlich auch nicht zentrisch an der vorderen Stirnfläche des Auswertungs-Gehäuses **16.1** an, sondern in dessen oberen Bereich.

Aus diesem Grund und auch weil die Bewegungsmöglichkeit eines Roboter-Armes je nach Bewegungs-Richtung unterschiedlich groß sein können, kann es sinnvoll sein, je nach Arbeitsaufgabe die Länge des mittleren Distanz-Gehäuses **16.2** größer oder kleiner zu wählen, den Zwischen-Winkel zwischen der axialen Distanz-Richtung **16.2'** des Distanz-Gehäuses **16.2** und der axialen Kopf-Richtung **16.3'** des Kopf-Gehäuses **16.3** unterschiedlich zu wählen und vor allem die radiale Richtung bzgl. der das Kopf-Gehäuse **16.3** abgeknickt ist, unterschiedlich auszuwählen.

Um dies zu ermöglichen zeigt **Figur 5b** ebenfalls im Längsschnitt eine zweite Bauform, bei denen Auswertungs-Gehäuse **16.1,** Distanz-Gehäuse **16.2** und Kopf-Gehäuse **16.3** separate Gehäuse-Teile sind, die an Kontaktflächen, welche lotrecht zur axialen Richtung **100** des geraden Distanz-Gehäuses **16.2** liegen, aneinandergesetzt und gegeneinander befestigt werden können.

Dadurch können auf sehr einfache Art und Weise vom prinzipiellen Aufbau, der sogenannten Pistolen-Form her ähnlich, aber in konkreten Abmessungen unterschiedlich gestaltete Gehäuse **16** geschaffen werden.

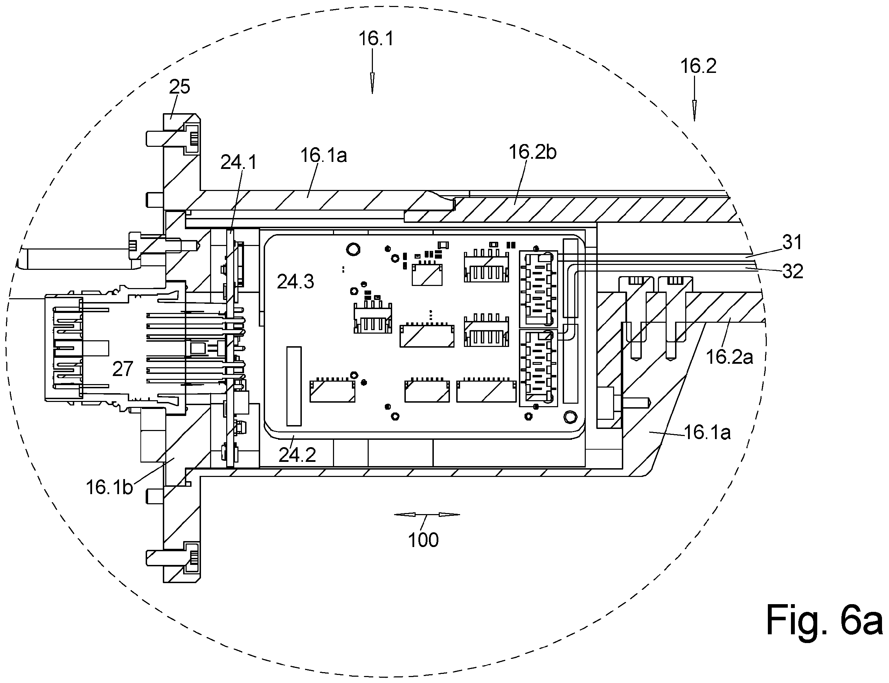

Wie am besten in der Vergrößerung der **Figur 6a** zu erkennen, besteht auch das Auswertungs-Gehäuse **16.1** aus mehreren Teilen: ein etwa topfförmiges Basisteil **16.1a** ist an seiner hinteren, hier linken, Stirnfläche offen und kann durch einen dort eingesetzten Stirndeckel **16.1b** verschlossen werden, indem zuvor in einem entsprechenden Durchlass die Steckerbuchse **27** angeordnet wurde und auf deren Richtung Inneres des Auswertungs-Gehäuses **16.1** weisende Pins eine I/O-Platine **24.1** aufgesteckt und mit diesen verlötet wurde, die ein Lochmuster entsprechend dieser Pins aufweist und nach Montage des Stirndeckels **16.1b** quer zur axialen Richtung **100** im Auswertungs-Gehäuse **16.1** nahe an dessen Stirndeckel **16.1b** sitzt.

Das Einsetzen der so bestückten Stirndeckel **16.1b** erfolgt üblicherweise, nachdem die I/O-Platine **24.1** mit den übrigen, bereits zuvor im Auswertungs-Gehäuse **16.1** montierten weiteren Platinen verdrahtet ist.

Dies sind vor allem die Auswertungs-Platine **24.2,** die sich in axialer Richtung, als der Längsrichtung, des Auswertungs-Gehäuses **16.1** erstreckt und im Wesentlichen dessen gesamten Freiraum beansprucht.

Parallel zu dieser und vorzugsweise mit der Auswertungs-Platine **24.2** über beiderseitig aufgelötete Steckkontakte verbunden ist eine Interface-Platine **24.3** vorhanden, die auf der zur Auswertungs-Platine **24.2** hin gerichteten Seite an dessen Steckkontakte oder Lötpunkte angepasste Verbindungselemente aufweist, auf der Zu- und Abfuhrseite für Signale und Strom jedoch immer gleich gestaltet ist, beispielsweise angepasst an die Signalleitung **31** und die Stromleitung **32** sowie die an diesem befestigten Stecker.

In der Regel ist die Interface-Platine **24.3** - über die der gesamte Datenverkehr sowie die Stromversorgung von und zur Auswertungs-Platine **24.2** läuft - ähnlich groß wie die Auswertungs-Platine **24.2.**

Das Auswertungs-Gehäuse **16.1** weist auch im Boden seines topfförmigen BasisTeiles **16.1a** eine Ausgangsöffnung für Leitungen **31, 32** auf, die verschlossen wird durch das an dieses vordere Ende des Auswertungs-Gehäuses **16.1** angesetzte Distanz-Gehäuse **16.2,** wobei dessen Basis-Teil 16.2a mit dem Basis-Teil **16.1a** verschraubt ist, während der obere Deckel **16.2b** des Distanz-Gehäuses **16.2** gegenüber dessen Basis-Teil **16.2a** verschraubt ist.

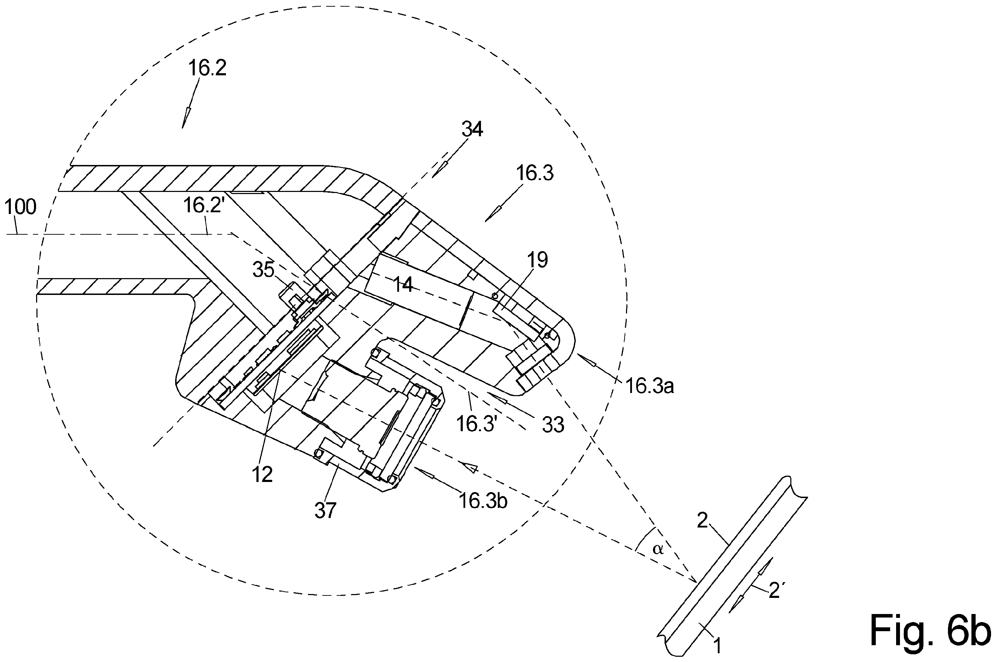

In der Vergrößerung der **Figur 6b** ist das Kopf-Gehäuse 16.3 besser zu erkennen und das vordere Ende des Distanz-Gehäuses **16.2.**

Dabei wird klar, dass bei dieser Bauform die Kontaktebene zwischen diesen beiden Gehäuse-Teilen in einem von 90° abweichenden Winkel, etwa in einem 45° Winkel, zur axialen Distanz-Richtung **16.2'** des Distanz-Gehäuses **16.2** steht.

**Figur 6a** zeigt ferner, dass das Kopf-Gehäuse **16.3** nicht nur aus einer Wandung mit etwa gleichbleibender Wandstärke besteht, sondern ein eher massives Teil ist mit Aufnahme-Öffnungen für die einzubauenden Teile des Prüfkopfes, nämlich
- dem Laser **14** einerseits und
- dem zweidimensional flächigen optischen Sensor **12** mit vorgelagerter Optik andererseits.

Das Kopf-Gehäuse **16.3** zeigt gemäß **Figur 6b** ferner - in der Seitenansicht betrachtet, in der die unterschiedlichen Erstreckungsrichtungen von Distanz-Gehäuse **16.2** einerseits und Kopf-Gehäuse **16.3** andererseits zu erkennen sind - dass das Kopf-Gehäuse **16.3** aus einem oberen und einem unteren Kopf-Endbereich **16.3a, 16.3b** besteht, zwischen welchen sich ein zum freien Ende des Kopf-Gehäuses **16.3** hin offener Einschnitt **33** befindet.

Dabei steht der Kopf-Endbereich **16.3a,** in dem sich der Laser 14 befindet und der meist der obere Kopf-Endbereich ist, weiter vor als der andere, meist der untere, Kopf-Endbereich **16.3b.**

Im unteren Kopf-Endbereich **16.3b** ist der flächige Sensor **12** und die vorgelagerte Optik angeordnet, wobei die Zentralachse der Optik nicht lotrecht zur Fläche des Sensors **12** steht, was aber bei der Auswertung rechnerisch berücksichtigt werden kann.

Ferner tritt der vom Laser **14** ausgestrahlte Lichtfächer nicht direkt durch ein lichtdurchlässiges Fenster im oberen Kopf-Endbereich **16.3a** aus, sondern dieser Lichtfächer wird vorher durch einen Spiegel **19** umgeleitet, um in einer Austrittsrichtung auszutreten, die um einen Triangulationswinkel **α** unterschiedlich zur Zentralachse der Optik der Kamera steht.

Die Optik ist von außen in eine Öffnung des Kopf-Gehäuses **16.3** eingesetzt, die bis zu dem - von der Rückseite des Kopf-Gehäuses **16.3** her eingesetzte und montierte - Sensor **12** reicht und in dieser eingesteckten Position kann die Optik durch eine aufgesteckte oder aufgeschraubte Schutzkappe **37** - mit ausreichend großer Öffnung in ihrer Frontfläche für den Lichteintritt - gesichert sein. Das Aufstecken bzw. Aufschrauben der Schutzkappe **37** ist nur wegen des Einschnittes **33** möglich.

Die Umlenkung über den Spiegel bewirkt, dass der Laser **14** nicht in der Verlängerungsrichtung der auf dem Objekt **1** auftretenden Lichtfächer angeordnet sein muss und dadurch das Kopf-Gehäuse **16.3** in dieser Seitenansicht sehr schmal und sich zum vorderen freien Ende hin verjüngend gestaltet werden kann.

### BEZUGSZEICHENLISTE

- 1: Objekt
- **2**: Oberfläche, Erhebung, Wulst
- **2'**: Verlaufsrichtung
- **3**: Lichtband
- **3'**: Erstreckungsrichtung, Verlaufsrichtung Lichtband
- **3"**: Lichtfächer, Fächerebene
- **3.17"**: aufgestrahlter Lichtfächer
- **3.5"**: reflektierter Lichtfächer
- **4**: Lichtband-Abbild
- **4**a: Aufwölbung
- **4**b: Vertiefung
- **5**: Abtastrichtung, Beobachtungsrichtung, reflektierter Lichtstrahl, Reflektionsrichtung
- **6**: Prüfvorrichtung
- **6**a: Detektoreinheit
- **7**: Bewegungsrichtung
- **8**: Stablinse
- **8'**: Verlaufsrichtung
- **8***: optische Achse
- **9**: Abstand
- **10**: Diffusor
- **10"**: Diffusor-Ebene
- **11**: elektronische Verarbeitungseinheit
- **12**: optischer Sensor
- **13**: Winkelhalbierende
- **14**: Lichtquelle
- **15**: Stecker, Kabelauslass
- **16**: Gehäuse
- **16.1**: Auswerte-Gehäuse
- **16.2**: Distanz-Gehäuse
- **16.3**: Kopf-Gehäuse
- **16.3a, b**: Kopf-Endbereich
- **17**: Aufstrahlrichtung
- **18**: Beobachtungsbreite, Lichtbandlänge
- **19**: Spiegel
- **20**: Hauptebene
- **21**: Lotrechte
- **22**: Oberfläche
- **23**: a, b Durchlass
- **24**: Platine
- **24.1**: I/O-Platine
- **24.2**: Auswertung-Platine
- **24.3**: Interface-Platine
- **25**: Flanschplatte
- **26**: Schraube Öffnung
- **27**: Steckerbuchse
- **28**: Zugentlastung
- **29**: Kabel
- **30**: Adapterplatte
- **31**: Signalleitung
- **32**: Stromleitung
- **33**: Einschnitt
- **34**: Funktionsanzeige
- **35**: LED
- **36**: Lichtleiter
- **37**: Schutzkappe
- **38**: Halteschraube
- 100: axiale Richtung
- 500: Roboterarm

- **Z1**: Zeile
- **R1**: Reihe
- **S1, S2**: Scan
- **α**: Triangulationswinkel
- **α1, α2**: Zwischenwinkel
- **β**: Ablenkungswinkel

## Patentansprüche

1. **Prüfvorrichtung** (6) zum optischen, berührungslosen Abtasten der Oberfläche (2) eines Objektes (1) mit
- einer Lichtquelle (14), die einen Lichtfächer (3") in einer Aufstrahlrichtung (17) auf die Oberfläche (2) aufstrahlt und dort ein Lichtband (3) erzeugt,
- einem flächigen, optischen Sensor (12) deren auf das Lichtband (3) gerichtete Abtast-Richtung (5) bei Betrachtung in Verlaufsrichtung (3') des Lichtbandes (3) in einem Triangulationswinkel (α) zur Aufstrahlrichtung (17) des Lichtfächers (3") steht,
- einer elektronischen Verarbeitungseinheit (11) zum Verarbeiten der vom Sensor (12) gelieferten Signale,
- einem Gehäuse (16), in dem sich die vorgenannten Komponenten befinden,
wobei das Gehäuse (16) umfasst
- ein Auswertungs-Gehäuse (16.1), in dem sich die Verarbeitungseinheit (11) befindet,
- ein Kopf-Gehäuse (16.3) in dem sich die Lichtquelle (14) und der optische Sensor (12) befinden,
- ein längliches, insbesondere Rohr-förmiges, Distanz-Gehäuse (16.2), durch welches die elektrischen Leitungen zwischen Kopf-Gehäuse (16.3) und Auswertungs-Gehäuse (16.1) verlaufen,
**dadurch gekennzeichnet, dass**
- in der Seitenansicht betrachtet das Kopf-Gehäuse (16.3) von seiner dicksten Stelle aus nach vorne zum freien Ende hin schmaler wird,
- in der Seitenansicht betrachtet das Kopf-Gehäuse (16.3) an seinem freien Ende einen oberen und unteren vorderen Kopf-Endbereich (16.3a, b) aufweist, die durch einen vom freien Ende her in das Kopf-Gehäuse (16.3) hineinreichenden Einschnitt (33) voneinander getrennt sind,
- einer der beiden Kopf-Endbereiche (16.3a, b) an dem freien Ende (S9, Z27) in axialer Kopf-Richtung (16.3') weiter vorsteht als der andere Kopf-Endbereich (16.3b).

2. Prüfvorrichtung nach Anspruch 1,
**dadurch gekennzeichnet, dass**
- die drei Gehäuse-Teile (16.1 - 16.3) dicht, aber lösbar, miteinander verbunden sind,
- insbesondere miteinander verschraubt sind.

3. Prüfvorrichtung nach einem der vorhergehenden Ansprüche,
**dadurch gekennzeichnet, dass**
- die axiale Kopf-Richtung (16.3') des Kopf-Gehäuses (16.3) an dessen vorderen Ende in der Seitenansicht betrachtet in einem Knick-Winkel zur axialen Richtung des Distanz-Gehäuses (16.2) verläuft,
- insbesondere in einem Knick-Winkel von 10° bis 40°, insbesondere von 20° bis 30°.

4. Prüfvorrichtung nach einem der vorhergehenden Ansprüche,
**dadurch gekennzeichnet, dass**
- die Länge des Distanz-Gehäuses (16.2) entlang seiner größten Erstreckung, der axialen Distanz-Richtung (16.2'), mindestens das doppelte, besser mindestens das dreifache, besser mindestens das fünffache, der Länge des Kopf-Gehäuses (16.3) beträgt
und/oder
- die größte Dicke des Distanz-Gehäuses (16.2) in einer Querrichtung lotrecht zur axialen Distanz-Richtung (16.2') geringer ist als die größte Dicke des Kopf-Gehäuses (16.3) quer hierzu, insbesondere geringer ist als das 0,7-fache hiervon.

5. Prüfvorrichtung nach einem der vorhergehenden Ansprüche,
**dadurch gekennzeichnet, dass**
die Prüfvorrichtung (6) umfasst
- eine seitlich über das Auswertungs-Gehäuse (16.1) vorstehende Flanschplatte (25) mit Schraub-Öffnungen (26) zum Verschrauben z.B. an dem vorderen Ende eines Roboterarmes am hinteren Ende des Auswertungs-Gehäuses (16.1), die insbesondere die rückwärtige Stirnwand des Auswertungs-Gehäuses (16.1) bildet
und/oder
- wenigstens einer Stecker-Buchse (27) in einer Wandung des Auswertungs-Gehäuses (16.1) zum elektrischen Verbinden der Prüfvorrichtung (6) mit einer übergeordneten Einheit
und/oder
- eine vom Auswertung-Gehäuse (16.1), insbesondere von der Flanschplatte (25), nach hinten abragende Zugentlastung (28) für ein zur Prüfvorrichtung (6) herangeführtes Kabel (29)
und/oder
- eine Adapterplatte (30) zum Verschrauben einerseits gegenüber einem tragenden Bauteil wie einem Roboterarm (5) und andererseits an der Flanschplatte oder dem Flanschring des Gehäuses (16) der Prüfvorrichtung (6).

6. Prüfvorrichtung nach Anspruch 5,
**dadurch gekennzeichnet, dass**
- die Zugentlastung (28) einen in Längsrichtung verlaufenden Tragstab (28a) sowie an dessen hinteren Ende eine Befestigungsvorrichtung (28b) für ein elektrisches Kabel aufweist.

7. Prüfvorrichtung nach einem der vorhergehenden Ansprüche,
**dadurch gekennzeichnet, dass**
- entweder nur eine Stecker-Buchse (27) zu in der rückwärtigen Stirnwand des Auswertungs-Gehäuses (16.1) angeordnet ist
- oder mehrere Stecker-Buchsen in der Umfangswand des Auswertungs-Gehäuses (16.1) angeordnet sind, insbesondere in axialer Richtung hintereinander und/oder beabstandet.

8. Prüfvorrichtung nach einem der vorhergehenden Ansprüche,
**dadurch gekennzeichnet, dass**
die elektrischen Signal-Leitungen (31) als elektromagnetisch abgeschirmte Koaxial-Kabel ausgebildet sind, bei denen insbesondere jede einzelne Ader der Leitung separat abgeschirmt ist als Koaxial-Kabel.

9. Prüfvorrichtung nach einem der Ansprüche 2, 5, 6 oder 7,
**dadurch gekennzeichnet, dass**
die Befestigungs-Elemente, insbesondere Verschraubungs-Elemente, an dem wenigstens Ende des Distanz-Gehäuses (16.2) einerseits sowie dem Auswertungs-Gehäuse (16.1) und/oder dem Kopf-Gehäuse (16.3) andererseits so ausgebildet sind, dass das Distanz-Gehäuse (16.2) in unterschiedlichen Drehlagen um die Längsrichtung (100) der Prüfvorrichtung im Bereich der Kontaktfläche zum angrenzenden anderen Gehäuseteil hin gegenüber diesem befestigbar ist.

10. Prüfvorrichtung nach einem der vorhergehenden Ansprüche,
**dadurch gekennzeichnet, dass**
der obere, vordere Kopf-Endbereich (16.3a) in axialer Kopf-Richtung (16.3') weiter vorsteht als der untere, vordere Kopf-Endbereich (16.3b).

11. Prüfvorrichtung nach einem der vorhergehenden Ansprüche,
**dadurch gekennzeichnet, dass**
die Lichtquelle (14), insbesondere der Laser (14), im weiter vorstehenden Kopf-Endbereich (16.3a) angeordnet ist und der Sensor (12), insbesondere einschließlich der vorgelagerten Optik, im zurückgesetzten Kopf-Endbereich (16.3b) angeordnet ist.

12. Prüfvorrichtung nach einem der vorhergehenden Ansprüche,
**dadurch gekennzeichnet, dass**
- die Abstrahl-Richtung des Lichts aus dem Kopf-Gehäuse (16.3) in einem spitzen Winkel zur axialen Richtung der Optik des Sensors (12) im schmaler werdenden Endbereich des Kopf-Gehäuse (16.3) verläuft,
- die Abstrahl-Richtung des Lichts aus der im schmaler werdenden Endbereich angeordneten Lichtquelle in einem stumpfen Winkel zur AbstrahlRichtung des Lichts aus dem Kopf-Gehäuse (16.3) verläuft mittels Umlenkung durch einen Spiegel (19).

13. Prüfvorrichtung nach einem der vorhergehenden Ansprüche,
**dadurch gekennzeichnet, dass**
- in der Wandung des Kopf-Gehäuses (16.3), insbesondere dessen Oberseite, eine von einer LED (35) beleuchtete, von außen sichtbare Funktionsanzeige (34) hinsichtlich der Prüfvorrichtung (6) vorhanden ist,
- insbesondere in Form eines in der Wandung eingelassenen, lichtdurchlässigen Wandabschnittes, insbesondere eines Lichtleiters (36).

14. Prüfvorrichtung nach einem der vorhergehenden Ansprüche,
**dadurch gekennzeichnet, dass**
- ein Objektiv von der freien Stirnseite her in den Endbereich des Kopf-Gehäuses (16.3) eingesteckt, insbesondere eingeschraubt, ist,
- dabei das Objektiv gehalten und/oder geschützt ist von einer an Kopf-Gehäuse (16.3) fixierbaren Schutzkappe (37) mit Durchgangsöffnung für das reflektierte Licht.

15. Prüfvorrichtung nach einem der vorhergehenden Ansprüche,
**dadurch gekennzeichnet, dass**
im Auswertungs-Gehäuse (16.1) angeordnet sind
- eine I/O-Platine (24.1) um zu den anderen Platinen hin die benötigten elektrischen Verbindungen zur Verfügung zu stellen, zur Stecker-Buchse hin jedoch die Buchsen-spezifischen Anschlüsse zur Verfügung zu stellen, wobei die I/O-Platine (24.1) insbesondere nahe an der Stecker-Buchse (27), mit der sie elektrisch verbunden ist, angeordnet und insbesondere an der rückwärtigen Stirnwand des Auswertungs-Gehäuses (16.1) befestigt ist,
- eine Auswertungs-Platine (24.2), die zumindest die Auswerte-Schaltung für die Signale des Sensors trägt,
- eine elektrisch damit verbundene Interface-Platine (24.3), welche elektrische Eingänge und Ausgänge entsprechend den Erfordernissen von Lichtquelle und Sensor sowie der I/O-Platine aufweist.

16. **Baukasten** zum Erstellen unterschiedlicher Varianten einer Prüfvorrichtung (6) mit einem Gehäuse (16) und mehreren darin unterzubringenden elektrischen Baugruppen, nämlich einer Prüfvorrichtung (6) gemäß einem der vorhergehenden Ansprüche,
wobei der Baukasten die mehreren in dem Gehäuse (16) unterzubringenden elektrischen Baugruppen aufweist und für das Gehäuse (16) folgende Baukasten-Teile aufweist
- wenigstens eine Sorte eines Auswertungs-Gehäuses (16.1), in dem die Verarbeitungseinheit (11) untergebracht werden kann,
- wenigstens eine Sorte eines Kopf-Gehäuses (16.3), in dem die Lichtquelle (14) und der optische Sensor (12) untergebracht werden kann,
- mehrere Sorten von sich, insbesondere in ihrer axialen Distanz-Länge (16.2'), unterscheidenden länglichen, insbesondere Rohr-förmigen, Distanz-Gehäusen (16.2), durch welches oder entlang welchem die elektrischen Leitungen zwischen Kopf-Gehäuse (16.3) und Auswertungs-Gehäuse (16.1) verlegt werden können,
wobei die drei Gehäuse-Teile (16.1 - 16.3) so ausgebildet sind, dass sie lösbar, aber insbesondere dicht, miteinander verbunden werden können, insbesondere miteinander verschraubt werden können, und
**dadurch gekennzeichnet, dass**
- in der Seitenansicht betrachtet das Kopf-Gehäuse (16.3) von seiner dicksten Stelle aus nach vorne zum freien Ende hin schmaler wird,
- in der Seitenansicht betrachtet das Kopf-Gehäuse (16.3) an seinem freien Ende einen oberen und unteren vorderen Kopf-Endbereich (16.3a, b) aufweist, die durch einen vom freien Ende her in das Kopf-Gehäuse (16.3) hineinreichenden Einschnitt (33) voneinander getrennt sind,
- einer der beiden Kopf-Endbereiche (16.3a, b) an dem freien Ende (S9, Z27) in axialer Kopf-Richtung (16.3') weiter vorsteht als der andere Kopf-Endbereich (16.3b).

17. Baukasten nach Anspruch 16,
**dadurch gekennzeichnet, dass**
die verschiedenen Sorten des Distanz-Gehäuses (16.2) sowohl eine gerade als auch eine gewinkelte oder gebogene Sorte umfassen.

18. Baukasten nach einem der vorhergehenden Baukasten-Ansprüche,
**dadurch gekennzeichnet, dass**
als weitere Baukasten-Teile vorhanden sind
- eine Flanschplatte (25) zum Befestigen an der rückseitigen Stirnfläche oder als Rückseite wenigstens einer Sorte des Auswertungs-Gehäuses (16.1)
und/oder
- eine Adapterplatte (30) zum Befestigen an der Flanschplatte (25)
und/oder
- wenigstens eine Sorte einer Zugentlastung zum Befestigen am Auswertungs-Gehäuses (16.1) oder der Flanschplatte (25) oder der Adapterplatte (30)
und/oder
- wenigstens eine, vorzugsweise mehrere, Sorten einer Stecker-Buchse zum Anordnen in einer Wandung einer Sorte des Auswertungs-Gehäuses (16.1)
und/oder
- mehreren, sich insbesondere in ihrer Länge unterscheidenden, Sorten von elektrischen Signal-Leitungen in Form von elektromagnetisch abgeschirmten Koaxial-Kabel), bei denen insbesondere jede einzelne Ader der Leitung separat abgeschirmt ist als Koaxial-Kabel.

19. Baukasten nach einem der vorhergehenden Baukasten-Ansprüche,
**dadurch gekennzeichnet, dass**
als weitere Baukasten-Teile, insbesondere zum Anordnen im Auswertungs-Gehäuse (16.1), vorhanden sind
- eine I/O-Platine (24.1) um zu den anderen Platinen hin die benötigten elektrischen Verbindungen zu bieten, zur Stecker-Buchse hin jedoch die Buchsen-spezifischen Anschlüsse, die mit der wenigstens einen SteckerBuchse verbunden werden können
und/oder
- eine Auswertungs-Platine (24.2), die zumindest die Auswerte-Schaltung für die Signale des Sensors trägt
und/oder
- eine elektrisch damit verwendbare Interface-Platine (24.3), welche elektrische Eingänge und Ausgänge entsprechend den Erfordernissen von Lichtquelle (14) und Sensor (12) sowie der I/O-Platine (24.1) aufweist.

## Claims

1. Testing device (6) for the optical, contactless scanning of the surface (2) of an object (1), comprising
- a light source (14) that beams a light fan (3") in a beam direction (17) onto the surface (2) and generates a light strip (3) there,
- a planar, optical sensor (12) whose scanning direction (5) directed onto the light strip (3) is in a triangulation angle (α) with respect to the beam direction (17) of the light fan (3) when viewed in path direction (3') of the light strip (3),
- an electronic processing unit (11) for processing the signals supplied by the sensor (12),
- a housing (16) in which the aforementioned components are located,
the housing (16) comprises
- an evaluation housing (16.1) in which the processing unit (11) is located,
- a head housing (16.3) in which the light source (14) and the optical sensor (12) are located,
- an elongated, especially tube-shaped distance housing (16.2), through which run the electrical lines between the head housing (16.3) and the evaluation housing (16.1),
**characterized in that**
- viewed from the side, from its thickest point the head housing (16.3) becomes narrower towards the front to the free end,
- viewed from the side the head housing (16.3) has at its free end an upper and a lower front head end region (16. 3a, b) separated from one another by an incision (33) extending from the free end into the head housing (16.3),
- one of the two head end regions (16.3a, b) at the free end protrudes further in axial head direction (16.3') than the other head end region (16.3b).

2. Testing device according to claim 1,
**characterized in that**
- the three housing parts (16.1-16.3) are connected to one another in a tight but detachable manner,
- especially are screwed to one another.

3. Testing device according to one of the preceding claims,
**characterized in that**
- the axial head direction (16.3 ') of the head housing (16.3) at its front end, viewed from the side, runs in a bend angle to the axial direction of the distance housing (16.2),
- especially at a bend angle of 10° to 40°, especially of 20° to 30°.

4. Testing device according to one of the preceding claims,
**characterized in that**
- the length of the distance housing (16.2) along its greatest extension, the axial distance direction (16.2'), is at least twice, better at least three times, better at least five times, the length of the head housing (16.3)
and/or
- the greatest thickness of the distance housing (16.2) in a transverse direction perpendicular to the axial distance direction (16.2 ') is less than the greatest thickness of the head housing (16.3) transverse thereto, especially is less than 0.7 times this thickness.

5. Testing device according to one of the preceding claims,
**characterized in that**
the testing device (6) comprises
- a flange plate (25) protruding laterally over the evaluation housing (16.1), with screw openings (26) for screwing for example to the front end of a robot arm at the rear end of the evaluation housing (16.1), which forms especially the rear end wall of the evaluation housing (16.1)
and/or
- at least one plug socket (27) in a wall of the evaluation housing (16.1) for electrically connecting the testing device (6) to a superordinate unit
and/or
- a strain relief (28) projecting rearwards from the evaluation housing (16.1), especially from the flange plate (25), for a cable (29) leading up to the testing device (6)
and/or
- an adapter plate (30) for screwing on the one hand to a supporting component part like a robot arm and on the other hand to the flange plate or the flange ring of the housing (16) of the testing device (6).

6. Testing device according to claim 5,
**characterized in that**
- the strain relief (28) comprises a supporting rod (28a) extending in the longitudinal direction, as well as at its rear end a fastening device (28b) for an electrical cable.

7. Testing device according to one of the preceding claims,
**characterized in that**
- either only one plug socket (27) is arranged in the rear end wall of the evaluation housing (16.1)
- or multiple plug sockets are arranged in the circumferential wall of the evaluation housing (16.1), especially located behind one another or spaced apart from one another in the axial direction.

8. Testing device according to one claims 2, 5, 6 oder 7,
**characterized in that**
the electrical signal lines (31) are formed as electromagnetically shielded coaxial cables, in which especially each individual wire of the line is shielded separately as coaxial cable.

9. Testing device according to one of the preceding claims,
**characterized in that**
the fastening elements, especially screw elements, on the at least one end of the distance housing (16.2) on the one hand and the evaluation housing (16.1) and/or the head housing (16. 3) on the other hand are designed such that the distance housing (16.2) can be fastened in different rotational positions about the longitudinal direction (100) of the testing device in the region of the contact surface towards the adjoining other housing part relative thereto.

10. Testing device according to one of the preceding claims,
**characterized in that**
the upper front head end region (16.3a) protrudes further in axial head direction (16.3') than the lower front head end region (16.3b).

11. Testing device according to one of the preceding claims,
**characterized in that**
the light source (14), especially the laser (14), is arranged in the more forwardly projecting head end region (16.3a), and the sensor (12), especially including the upstream optics, is arranged in the set-back head end region (16.3b).

12. Testing device according to one of the preceding claims,
**characterized in that**
- the beam direction of the light from the head housing (16.3) is at an acute angle with respect to the axial direction of the optics of the sensor (12) in the narrowing end region of the head housing (16.3),
- the beam direction of the light from the light source arranged in the narrowing end region is at an obtuse angle to the beam direction of the light from the head housing (16.3) by means of deflection by a mirror (19).

13. Testing device according to one of the preceding claims,
**characterized in that**
- the wall of the head housing (16.3), especially its upper side, contains a function display (34) for the testing device (6) that is illuminated by an LED (35) and is visible from the outside,
- especially is in the form of a light-permeable wall portion, especially a light guide (36), let into the wall.

14. Testing device according to one of the preceding claims,
**characterized in that**
- an objective lens is inserted, especially screwed in, from the free end side into the end region of the head housing (16.3),
- in this case the objective lens is held and/or protected by a protective cap (37) that can be fixed to the head housing (16.3), with a through-opening for the reflected light.

15. Testing device according to one of the preceding claims,
**characterized in that**
in the evaluation housing (16.1) are arranged
- an I/O circuit board (24.1) in order to provide the other circuit boards with the necessary electrical connections, to provide the plug socket however with the socketspecific connections, wherein the I/O circuit board (24.1).) is arranged especially close to the plug socket (27) to which it is electrically connected, and especially is fastened to the rear end wall of the evaluation housing (16.1),
- an evaluation circuit board (24.2) that carries at least the evaluation circuit for the signals of the sensor,
- an interface circuit board (24.3) electrically connected thereto, which comprises electrical inputs and outputs corresponding to the requirements of the light source and sensor as well as the I/O circuit board.

16. Kit for creating different variants of a testing device (6) with a housing (16) and multiple electrical assemblies to be accommodated therein, namely a testing device (6) according to one of the preceding claims,
wherein the kit comprises the multiple electrical assemblies to be accommodated in the housing (16) and comprises for the housing (16) the following kit parts
- at least one type of evaluation housing (16.1), in which the processing unit (11) can be accommodated,
- at least one type of head housing (16.3), in which the light source (14) and the optical sensor (12) can be accommodated,
- multiple types of distinguishing, especially in their axial distance-length, elongated, especially tube-shaped, distance housings (16.2), through which or along which the electrical lines between the head housing (16.3) and evaluation housing (16.1) can be laid,
wherein the three housing parts (16.1-16.3) are designed in such a way that they can be connected to one another in a detachable but especially tight manner, especially can be screwed together, and
**characterized in that**
- viewed from the side, from its thickest point the head housing (16.3) becomes narrower towards the front to the free end,
- viewed from the side the head housing (16.3) has at its free end an upper and a lower front head end region (16. 3a, b) separated from one another by an incision (33) extending from the free end into the head housing (16.3),
- one of the two head end regions (16.3a, b) at the free end protrudes further in axial head direction (16.3') than the other head end region (16.3b).

17. Kit according to claim 16,
**characterized in that**
the various types of distance housing (16.2) include both a straight type as well as an angled or bent type.

18. Kit according to one of the preceding kit claims,
**characterized in that**
as further kit parts there are provided
- a flange plate (25) for fastening to the rear-side end face or as rear side of at least one type of evaluation housing (16.1)
and/or
- an adapter plate (30) for fastening to the flange plate (25)
and/or
- at least one type of strain relief for fastening to the evaluation housing (16.1) or the flange plate (25) or the adapter plate (30)
and/or
- at least one, preferably several, types of plug socket for arranging in a wall of a type of the evaluation housing (16.1)
and/or
- multiple types of electrical signal lines differing especially as regards their length, in the form of electromagnetically shielded coaxial cables, in which especially each individual wire of the line is separately shielded as coaxial cable.

19. Kit according to one of the preceding kit claims,
**characterized in that**
as further kit parts, especially for arranging in the evaluation housing (16.1), there are provided
- an I/O circuit board (24.1) in order to provide the other circuit boards with the necessary electrical connections, to provide the plug socket however with the socketspecific connections that can be connected to the at least one plug socket
and/or
- an evaluation circuit board (24.2) that carries at least the evaluation circuit for the signals of the sensors
and/or
- an interface circuit board (24.3) electrically usable therewith, which has electrical inputs and outputs corresponding to the requirements of the light source (14) and sensor (12) as well as the I/O circuit board (24.1).

## Revendications

1. **Dispositif de contrôle** (6) destiné au balayage optique sans contact de la surface (2) d'un objet (1), comprenant
- une source lumineuse (14) qui projette un éventail lumineux (3") dans une direction d'irradiation (17) sur la surface (2) et y génère une bande lumineuse (3),
- un capteur optique plat (12) dont la direction de balayage (5), orientée vers la bande lumineuse (3), forme, lorsqu'on observe dans le sens de propagation (3') de la bande lumineuse (3), un angle de triangulation (α) par rapport à la direction d'irradiation (17) de l'évential lumineux (3"),
- une unité de traitement électronique (11) destinée à traiter les signaux fournis par le capteur (12),
- un boîtier (16) dans lequel se trouvent les composants susmentionnés,
dans lequel le boîtier (16) comprend
- un boîtier d'évaluation (16.1) dans lequel se trouve l'unité de traitement (11),
- un boîtier de tête (16.3) dans lequel se trouvent la source lumineuse (14) et le capteur optique (12),
- un boîtier d'écartement (16.2) allongé, notamment tubulaire, à travers lequel passent les câbles électriques entre le boîtier de tête (16.3) et le boîtier d'évaluation (16.1),
**caractérisé en ce que**
- vu de profil, le boîtier de tête (16.3) s'affine depuis son point le plus épais vers l'avant jusqu'à son extrémité libre,
- vu de profil, le boîtier de tête (16.3) présente, à son extrémité libre, une zone d'extrémité de têté avant supérieure et une zone d'extrémité de tête avant inférieure (16.3a, b), qui sont séparées l'une de l'autre par une encoche (33) s'étendant depuis l'extrémité libre vers l'intérieur du boîtier de tête (16.3),
- l'une des deux zones d'extrémité de tête (16.3a, b) fait saillie davantage à l'extrémité libre (S9, Z27) dans la direction axiale de la tête (16.3') que l'autre zone d'extrémité de tête (16.3b).

2. Dispositif de contrôle selon la revendication 1,
**caractérisé en ce que**
- les trois parties de boîtier (16.1 - 16.3) sont assemblées entre elles de manière étanche mais amovible,
- en particulier, elles sont vissées les unes aux autres.

3. Dispositif de contrôle selon l'une des revendications précédentes,
**caractérisé en ce que**
- la direction axiale de la tête (16.3') du boîtier de tête (16.3), vue de profil au niveau de son extrémité avant, s'étend selon un angle d'inclinaison par rapport à la direction axiale du boîtier d'écartement (16.2),
- en particulier selon un angle d'inclinaison compris entre 10° et 40°, en particulier entre 20° et 30°.

4. Dispositif de contrôle selon l'une des revendications précédentes,
**caractérisé en ce que**
- la longueur du boîtier d'écartement (16.2) le long de sa plus grande extension, à savoir la direction axiale d'écartement (16.2'), est au moins le double, de préférence au moins le triple, mieux encore au moins le quintuple, de la longueur du boîtier de tête (16.3),
et/ou
- l'épaisseur maximale du boîtier d'écartement (16.2) dans une direction transversale perpendiculaire à la direction axiale d'écartement (16.2') est inférieure à l'épaisseur maximale du boîtier de tête (16.3) dans une direction transversale à celle-ci, en particulier inférieure à 0,7 fois celle-ci.

5. Dispositif de contrôle selon l'une des revendications précédentes,
**caractérisé en ce que**
le dispositif de contrôle (6) comprend
- une plaque à bride (25) faisant saillie latéralement au-delà du boîtier d'évaluation (16.1), comportant des orifices de vissage (26) destinés à être vissée, par exemple, à l'extrémité avant d'un bras de robot au niveau de l'extrémité arrière du boîtier d'évaluation (16.1), qui forme notamment la paroi frontale arrière du boîtier d'évaluation (16.1),
et/ou
- au moins une prise femelle (27) dans une paroi du boîtier d'évaluation (16.1) pour relier électriquement le dispositif de contrôle (6) à une unité de niveau supérieur,
et/ou
- un dispositif de décharge de traction (28) faisant saillie vers l'arrière à partir du boîtier d'évaluation (16.1), en particulier à partir de la plaque à bride (25), pour un câble (29) acheminé vers le dispositif de contrôle (6),
et/ou
- une plaque d'adaptation (30) destinée à être vissée, d'une part, à un élément porteur tel qu'un bras de robot (5) et, d'autre part, à la plaque à bride ou à la bague à bride du boîtier (16) du dispositif de contrôle (6).

6. Dispositif de contrôle selon la revendication 5,
**caractérisé en ce que**
- le dispositif de décharge de traction (28) comporte une tige de support (28a) s'étendant dans le sens longitudinal ainsi qu'un dispositif de fixation (28b) pour un câble électrique à son extrémité arrière.

7. Dispositif de contrôle selon l'une des revendications précédentes,
**caractérisé en ce que**
- soit une seule prise femelle (27) est disposée dans la paroi arrière du boîtier d'évaluation (16.1),
- soit plusieurs prises femelles sont disposées dans la paroi circonférentielle du boîtier d'évaluation (16.1), en particulier les unes derrière les autres dans le sens axial et/ou espacées les unes des autres.

8. Dispositif de contrôle selon l'une des revendications précédentes,
**caractérisé en ce que**
les lignes de signaux électriques (31) sont réalisées sous forme de câbles coaxiaux blindés électromagnétiquement, dans lesquels, en particulier, chaque conducteur individuel de la ligne est blindé séparément en tant que câble coaxial.

9. Dispositif de contrôle selon l'une des revendications 2, 5, 6 ou 7,
**caractérisé en ce que**
les éléments de fixation, notamment des éléments de vissage, situés d'une part à au moins une extrémité du boîtier d'écartement (16.2) ainsi que, d'autre part, sur le boîtier d'évaluation (16.1) et/ou le boîtier de tête (16.3) d'autre part, sont conçus de telle sorte que le boîtier d'écartement (16.2) puisse être fixé dans différentes positions de rotation autour de la direction longitudinale (100) du dispositif de contrôle, au niveau de la surface de contact avec l'autre partie adjacente du boîtier, par rapport à celle-ci.

10. Dispositif de contrôle selon l'une des revendications précédentes,
**caractérisé en ce que**
la zone d'extrémité de tête avant supérieure (16.3a) fait saillie davantage dans la direction axiale de la tête (16.3') que la zone d'extrémité de tête avant inférieure (16.3b).

11. Dispositif de contrôle selon l'une des revendications précédentes,
**caractérisé en ce que**
la source lumineuse (14), en particulier le laser (14), est disposée dans la zone d'extrémité de tête (16.3a) qui fait davantage saillie, et le capteur (12), comprenant notamment l'optique située en amont, est disposé dans la zone d'extrémité de tête (16.3b) en retrait.

12. Dispositif de contrôle selon l'une des revendications précédentes,
**caractérisé en ce que**
- la direction de rayonnement de la lumière provenant du boîtier de tête (16.3) forme un angle aigu avec la direction axiale de l'optique du capteur (12) dans la zone d'extrémité du boîtier de tête (16.3) qui se rétrécit,
- la direction d'émission de la lumière provenant de la source lumineuse disposée dans la zone d'extrémité se rétrécissant forme un angle obtus avec la direction d'émission de la lumière provenant du boîtier de tête (16.3) grâce à une déviation par un miroir (19).

13. Dispositif de contrôle selon l'une des revendications précédentes,
**caractérisé en ce que**
- dans la paroi du boîtier de tête (16.3), en particulier sur sa face supérieure, est prévu un indicateur de fonctionnement (34) visible de l'extérieur et éclairé par une LED (35), concernant le dispositif de contrôle (6),
- notamment sous la forme d'une partie de paroi translucide encastrée dans la paroi, en particulier d'un conducteur optique (36).

14. Dispositif de contrôle selon l'une des revendications précédentes,
**caractérisé en ce que**
- un objectif est inséré, notamment vissé, depuis la face frontale libre dans la zone d'extrémité du boîtier de tête (16.3),
- l'objectif étant ainsi maintenu et/ou protégé par un capuchon de protection (37) pouvant être fixé sur le boîtier de tête (16.3) et comportant une ouverture de passage pour la lumière réfléchie.

15. Dispositif de contrôle selon l'une des revendications précédentes,
**caractérisé en ce que**
sont disposés dans le boîtier d'évaluation (16.1)
- une carte E/S (24.1) destinée à fournir les connexions électriques nécessaires vers les autres cartes, mais à fournir les connexions spécifiques à la prise vers la prise femelle, dans lequel la carte E/S (24.1) est notamment disposée à proximité de la prise femelle (27) à laquelle elle est reliée électriquement, et est notamment fixée à la paroi arrière du boîtier d'évaluation (16.1),
- une carte d'évaluation (24.2) qui porte au moins le circuit d'évaluation des signaux du capteur,
- une carte d'interface (24.3) reliée électriquement à celle-ci, qui comporte des entrées et des sorties électriques correspondant aux besoins de la source lumineuse, du capteur et de la carte E/S.

16. **Système modulaire** permettant de réaliser différentes variantes d'un dispositif de contrôle (6) comprenant un boîtier (16) et plusieurs modules électriques destinés à y être logés, à savoir un dispositif de contrôle (6) selon l'une des revendications précédentes,
dans lequel le système modulaire comprend les différents modules électriques destinés à être logés dans le boîtier (16) et comporte pour le boîtier (16), les éléments de système modulaire suivants
- au moins un type de boîtier d'évaluation (16.1), dans lequel l'unité de traitement (11) peut être logée,
- au moins un type de boîtier de tête (16.3), dans lequel la source lumineuse (14) et le capteur optique (12) peuvent être logés,
- plusieurs types de boîtiers d'écartement (16.2) allongés, notamment tubulaires, se distinguant notamment par leur longueur d'écartement axiale (16.2'), à travers lesquels ou le long desquels les câbles électriques peuvent être acheminés entre le boîtier de tête (16.3) et le boîtier d'évaluation (16.1),
dans lequel les trois parties de boîtier (16.1 - 16.3) sont conçues de manière à pouvoir être assemblées entre elles de façon amovible, mais surtout étanche, notamment par vissage, et
**caractérisé en ce que**
- vu de profil, le boîtier de tête (16.3) se rétrécit depuis son point le plus épais vers l'avant jusqu'à son extrémité libre,
- vu de profil, le boîtier de tête (16.3) présente, à son extrémité libre, une zone d'extrémité de tête avant supérieure et une zone d'extrémité de tête avant inférieure (16.3a, b), qui sont séparées l'une de l'autre par une encoche (33) s'étendant depuis l'extrémité libre vers l'intérieur du boîtier de tête (16.3),
- l'une des deux zones d'extrémité de tête (16.3a, b) fait saillie davantage à l'extrémité libre (S9, Z27) dans la direction axiale de la tête (16.3') que l'autre zone d'extrémité de tête (16.3b).

17. Système modulaire selon la revendication 16,
**caractérisé en ce que**
les différentes types de boîtier d'écartement (16.2) comprennent à la fois un type droit et un type angulaire ou courbée.

18. Système modulaire selon l'une des revendications précédentes,
**caractérisé en ce que**
il comprend, en tant qu'autres éléments du système modulaire,
- une plaque à bride (25) destinée à être fixée sur la face frontale arrière ou sur la face arrière d'au moins un type de boîtier d'évaluation (16.1),
et/ou
- une plaque d'adaptation (30) destinée à être fixée à la plaque à bride (25),
et/ou
- au moins un type de dispositif de décharge de traction destiné à être fixé au boîtier d'évaluation (16.1) ou à la plaque à bride (25) ou à la plaque d'adaptation (30),
et/ou
- au moins un, de préférence plusieurs, types de prises femelles destinés à être disposés dans une paroi d'un type de boîtier d'évaluation (16.1),
et/ou
- plusieurs types de câbles de signaux électriques, se distinguant notamment par leur longueur, sous la forme de câbles coaxiaux blindés électromagnétiquement, dans lesquels, en particulier, chaque conducteur individuel du câble est blindé séparément en tant que câble coaxial.

19. Système modulaire selon l'une des revendications précédentes,
**caractérisé en ce que**
il comprend, en tant qu'autres éléments du système modulaire, destinés notamment à être disposés dans le boîtier d'évaluation (16.1)
- une carte E/S (24.1) destinée à assurer les connexions électriques nécessaires vers les autres cartes, mais présentant, du côté de la prise femelle, les raccordements spécifiques à celle-ci, qui peuvent être reliés à ladite au moins une prise femelle,
et/ou
- une carte d'évaluation (24.2) qui porte au moins le circuit d'évaluation des signaux du capteur,
et/ou
une carte d'interface (24.3) pouvant être utilisée électriquement avec celle-ci, qui présente des entrées et des sorties électriques correspondant aux besoins de la source lumineuse (14) et du capteur (12) ainsi que de la carte E/S (24.1).
